(19) Europäisches Patentamt
European Patent Office
Office européen des brevets

(11) **EP 4 715 452 A1**

(12) **EUROPEAN PATENT APPLICATION**
published in accordance with Art. 153(4) EPC

(43) Date of publication:
**25.03.2026 Bulletin 2026/13**

(51) International Patent Classification (IPC):
**G02C 7/02** (2006.01)  **G02B 1/115** (2015.01)

(21) Application number: **24807145.8**

(52) Cooperative Patent Classification (CPC):
**G02B 1/115; G02C 7/02**

(22) Date of filing: **10.05.2024**

(86) International application number:
**PCT/JP2024/017389**

(87) International publication number:
**WO 2024/237193 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.05.2023 JP 2023079843**

(71) Applicant: **HOYA LENS THAILAND LTD.
Pathumthani 12130 (TH)**

(72) Inventor: **OOKUBO, Shigeki
Tokyo 160-8347 (JP)**

(74) Representative: **Betten & Resch
Patent- und Rechtsanwälte PartGmbB
Maximiliansplatz 14
80333 München (DE)**

(54) **SPECTACLE LENS AND SPECTACLES**

(57)    There are provided a spectacle lens and a related technique, including: an object-side surface and an eyeball-side surface, wherein in two areas A and B in an area within a spectacle frame in a plan view on one surface of the spectacle lens, the spectacle lens has a film so that in one area A, at least a part of the film is absent, and in the other area B, the part of the film is present, the spectacle lens further including: a design pattern that is constituted due to a difference in appearance between the area A and the area B when a third party views the spectacle lens in a worn state from the object-side surface, wherein a visible transmittance in the area A and a visible transmittance in the area B are both 80% or more, and an arithmetic mean roughness RaA of the area A is 0.2 μm or less.

**FIG. 1**

EP 4 715 452 A1

## Description

Technical Field

The present invention relates to a spectacle lens and spectacles.

Background Art

Some spectacle lenses are constituted by coating an optical surface of a lens base material with a thin film such as a hard coat film or an anti-reflection film.

Claims 1 and 4 of Patent Document 1 disclose as follows: by applying laser irradiation to an inner layer (preferably consisting essentially of tin) that absorbs a marking wavelength more than any other layer between an electromagnetic wave source and the inner layer, the inner layer and any other layer between the electromagnetic wave source and the inner layer are partially removed by at least a portion of the thickness of the inner layer.

In [0070] of Patent Document 1, the content of the laser irradiation step is described as follows. An irradiation step is performed by emitting a focused beam of:

· A radiation wavelength in a range of 200 to 400 nm, preferably 200 to 300 nm,
· A pulse duration in a range of 0.5 to 5 ns (i.e., an order of nanoseconds or more), and
· Energy per one pulse in a range of 0.1 to 10 $\mu$J, preferably in a range of 0.5 to 3 $\mu$J, and
· Pulsed ultraviolet laser radiation with a beam diameter in a range of 5 to 50 $\mu$m at a marking spot.

In [0075] of Patent Literature 1, the inner layer that absorbs the marking wavelength is described as follows.
A silica or zirconia-based layer is substantially transparent to wavelengths in a range of 200 to 300 nm, whereas a tin-based layer absorbs a sufficient amount of energy at this wavelength to locally destroy and even remove at least a portion of its thickness.

In contrast to the technique described in Patent Literature 1, paragraph [0053] of Patent Literature 2 raises the following problem. Generally, in laser processing for partially removing a thin film, heat processing using a laser light with a pulse width on the order of nanoseconds or more is widely used. In the heat processing, the energy of the laser light is absorbed by the part to be processed of the thin film due to the transmittance (absorption) of the laser light and the thin film, thereby removing the thin film. However, when such a heat processing is applied to an AR film, each layer of the multilayer structure that constitutes the AR film has the ability to absorb laser light, so not only an outermost layer of the multilayer structure but also multiple layers including the outermost layer are removed. In addition, there is a risk of thermal damage occurring in the surrounding area of the removed processed part. Particularly, there is a concern that damage caused by heat may remain on the surface of an underlying layer that will be exposed after removal.

As a solution to this problem, claim 1 of Patent Literature 2 describes a method for manufacturing an optical member, including a removal step of performing non-heat processing by irradiation of an ultrashort pulse laser to an anti-reflection film having a multilayer structure in which a low refractive index layer and a high refractive index layer are laminated, which is formed so as to cover the optical surface of an optical base material, to partially remove the low refractive index layer, which is the outermost layer of the multilayer structure, and to expose the high refractive index layer.

According to the non-heat processing described in Patent Literature 2, since the removal processing is performed by the effect of the pulse width rather than the effect of the absorption energy of the laser light, the $SiO_2$ layer, which is the outermost layer of the multilayer structure that constitutes the AR film can be removed ([0054]). This $SiO_2$ layer is not an "inner layer essentially composed of tin" as described in Patent Literature 1. Further, due to the non-heat processing, the thermal impact on the surrounding area of the processed part is reduced, and thermal damage is suppressed.

The following content is described in paragraph [0041] of Patent Literature 2 regarding a laser processing device used for the laser processing described in Patent Literature 2.

· A laser light source unit 21 emits laser light used in the laser processing, and is configured to emit an ultrashort pulse laser.
· An ultrashort pulse laser is, for example, the one having a pulse width of 0.1 picoseconds or more and less than 100 picoseconds, preferably the one having a pulse width of 0.1 picoseconds or more and 30 picoseconds or less, and more preferably the one having a pulse width of 0.1 picoseconds or more and 15 picoseconds or less. In any case, the ultrashort pulse laser is on the order of less than a nanosecond.
· The wavelength of the ultrashort pulse laser is, for example, 355 nm THG (Third Harmonic Generation) or 532 nm SHG (Second Harmonic Generation), but is not limited thereto, and may be, for example, a fundamental wavelength of 1064 nm or 266 nm FHG (Fourth Harmonic Generation).
· The pulse energy of the ultrashort pulse laser is, for example, 0.1 $\mu$J or more and 30 $\mu$J or less (maximum approximately 60 $\mu$J) at 50 kHz.
· A beam diameter of the ultrashort pulse laser is, for example, 10 $\mu$m or more and 30 $\mu$m or less.

According to [0017] of Patent Literature 2, marking is performed on an optical member without causing a deterioration in the quality of the optical member. According to [0022] of Patent Literature 2, marking of a decorative pattern representing a logo, house mark, or the like is performed on an optical surface so that the decorative pattern is positioned within a lens area after frame cutting. According to [0075] of Patent Literature 2, non-thermal processing using an ultrashort pulse laser may be used for performing some kind of patterning on the optical surface of the optical member. In this specification, for any content not described below, the description in Patent Literature 2 can be referred to as appropriate.

Citation List

Patent Literature

Patent Literature 1: Japanese Patent Publication No. 2019-523447
Patent Literature 2: Japanese Patent Application Laid-Open No. 2022-7102

Summary of the Invention

Solution to Problem

The technique described in Patent Literature 2 focuses solely on reducing thermal damage by performing marking by non-heat processing. Patent Literature 2 does not mention the utilization of the portion that has not been subjected to non-heat processing, but only mentions the deterioration of the portion that has been subjected to non-heat processing.

One example of the present invention aims to improve the fashionability of a wearer when viewed by a third party while ensuring a comfortable field of vision for the wearer.

Means for solving the Problem

The inventor of the present invention found that a portion subjected to non-heat processing is easily distinguishable from a portion not subjected to processing, thereby obtaining an effective design pattern and found that the two portions work together to form a design pattern. Hereinafter, non-heat processing will also be referred to as laser processing.

Based on this finding, the degree of freedom in the design pattern is greatly expanded. The shape of the laser processing is not limited to points or lines, but can also be a surface (i.e., an area).

The reason for providing an area A as the laser-processed area is as follows: it is desirable that the design pattern formed on the spectacle lens be easily visible to a third party. Therefore, it is considered preferable that the area be sufficient for a resolution of a human eye, and that the processing portion be sufficiently distinguishable from its surroundings. From the viewpoint that the object-side surface is the area that forms the basis of an appearance of the spectacle lens in a worn state when viewed by a third party from an object side, the inventor considers it effective that the area A as a surface is included in the design pattern, rather than it is composed only of a laser-processing portion such as tiny dot that has only side wall and a curved bottom. Providing the area A as a surface may reflect the intention to treat the area A and the area B equally based on the above-described viewpoint that the portion that has not been subjected to non-heat processing (area B) is also constituted as a part of the design pattern.

On the other hand, the inventor found that when performing non-heat processing (laser processing) to form the area A as a surface that allows a desired design pattern to be easily visible to a third party, the surface roughness of the area A needs to be controlled.

A normal spectacle lens has a highly smooth surface. Therefore, when the area A formed by the non-heat processing has the same level of smoothness or even more, the design pattern formed by the processing will reflect light specularly, and a sufficiently bright light enters into the eyes of a third party, enabling to clearly view the area A by a third party. Through investigation by the inventor, it was found that this is true not only when the light is incident from a lens processing surface side, but also when the light is incident from a rear side of the processing surface.

Specifically, the inventor found that the surface roughness of the area A can be at the same level as the area B, which has not been subjected to laser processing (i.e., smoothness equal to or greater than the surface (Ra of 0.2 $\mu$m or less) obtained by mirror-finishing the lens base material before each film is formed). That is, from the viewpoint of the surface roughness, the inventor found that in consideration of the surface roughness of the non-laser processing portion, the surface roughness of the laser processing portion can be controlled so that both portions can form the design pattern when a third party views the wearer.

The surface roughness Ra of the area A is more preferably 0.1 $\mu$m or less, and even more preferably 0.05 $\mu$m or less, 0.01 $\mu$m or less, or less than 0.0080 $\mu$m.

The following each aspect has been created based on the above findings. Among the following aspects, aspects that depend on an independent aspect can be arbitrarily combined with other dependent aspects and/or other independent aspects.

A first aspect is a spectacle lens including: an object-side surface and an eyeball-side surface, wherein in two areas A and B in an area within a spectacle frame in a plan view on one surface of the spectacle lens, the spectacle lens has a film so that in one area A, at least a part of the film is absent, and in the other area B, the part of the film is present, the spectacle lens further including: a design pattern that is constituted due to a difference in appearance between the area A and the area B when a third party views the spectacle lens in a worn state from the object-side surface, wherein a visible transmittance in the area A and a visible transmittance in the area B are both 80% or more, and an arithmetic mean roughness RaA of the area A is 0.2 μm or less.

A second aspect is the spectacle lens according to the first aspect, including: a lens base material having an optical surface; and an anti-reflection film that is a film coating the optical surface of the lens base material, the anti-reflection film having a multilayer structure including a laminate of a low refractive index layer and a high refractive index layer, and the anti-reflection film including a reactive layer that is relatively more reactive to irradiation with an ultrashort pulse laser than other layers included in the anti-reflection film, wherein in the area A, which is a removal portion resulting from at least partial removal of a predetermined layer including an outermost layer of the multilayer structure, the high refractive index layer below the reactive layer or the partially remaining reactive layer is exposed.

A third aspect is the spectacle lens according to the first or second aspect, wherein the difference between the appearance of the area A and the appearance of the area B includes a difference in specular gloss due to reflected light, and the specular gloss of the area A is equal to or greater than the specular gloss of the area B.

A fourth aspect is the spectacle lens according to any one of the first to third aspects, wherein the difference between the appearance of the area A and the appearance of the area B includes a difference in color due to reflected light.

A fifth aspect is the spectacle lens according to any one of aspects 1 to 4, wherein when a third party views the spectacle lens in a worn state from the object side, and when the area A appears colored due to reflected light a, the area B also appears colored due to reflected light b.

A sixth aspect is the spectacle lens according to any one of the first to fifth aspects, including: a lens base material having an optical surface; and an anti-reflection film that is a film coating the optical surface of the lens base material, wherein the anti-reflection film has a high anti-reflection ability against some wavelengths of visible light; a color of reflected light from the area B is a color of a wavelength of the visible light at which the anti-reflection ability is low; and a color of reflected light from the area A is a color of a wavelength of the visible light at which the anti-reflection ability is low when an outermost surface of the anti-reflection film is partially absent.

A seventh aspect is the spectacle lens according to any one of the first to sixth aspects, wherein a ratio (RaA/RaB) of an arithmetic mean roughness RaA of the area A to an arithmetic mean roughness RaB of the area B is 3 or less.

An eighth aspect is the spectacle lens according to any one of the first to seventh aspects, wherein both area A and area B are outermost surface areas.

A nineth aspect is the spectacle lens according to any one of the first to eighth aspects, wherein RaA is less than 0.0080 μm.

A tenth aspect is the spectacle lens according to any one of the first to nineth aspects, wherein the area A is present within an area having a radius of 30 mm from a lens center.

An eleventh aspect is the spectacle lens according to any one of the first to tenth aspects, wherein the area A is present on a nose side and on a lower side when viewed from a lens center.

A twelfth aspect is the spectacle lens according to any one of the first to eleventh aspects, wherein the area A occupies 5% to 99% of an entire spectacle lens in a plan view.

A thirteenth aspect is the spectacle lens according to any one of the first aspect twelfth aspect, wherein a maximum total length of a portion constituting the area A is 8 mm or more in a plan view.

A fourteenth aspect is the spectacle lens according to any one of the first to thirteenth aspects, wherein an average visible light reflectance in the area A is 7% or more.

A fifteenth aspect is the spectacle lens according to any one of the first to fourteenth aspects, wherein a brightness in the area A is higher than that in the area B.

A sixteenth aspect is the spectacle lens according to any one of the first to fifteenth aspects, wherein the anti-reflection film is a film having a high anti-reflection ability in a predetermined wavelength range of visible light; a color of reflected light from the area B is a color of a wavelength of the visible light at which the anti-reflection ability is relatively low; a color of the reflected light from the area A is a color of a wavelength of the visible light at which the anti-reflection ability is low when an outermost surface of the anti-reflection film is partially absent; a difference between an appearance of the area A and an appearance of the area B from which a predetermined layer including the outermost layer of the multilayer structure has not been removed includes a difference in specular gloss due to reflected light and a difference in color; the specular gloss of the area A is equal to or greater than the specular gloss of the area B; RaA is less than 0.0080 μm; a ratio of an arithmetic mean roughness RaA of the area A to an arithmetic mean roughness RaB of the area B (RaA/RaB) is 3 or less; the area A occupies 5% or more and 99% or less of an entire spectacle lens in a plan view; and a maximum total length of a portion constituting the area A is 8 mm or more in a plan view.

A seventeenth aspect is spectacles including: a spectacle frame; and spectacle lenses after edging each having an object-side surface and an eyeball-side surface, wherein in two areas A and B in a plan view on one surface of the spectacle lens after edging, the spectacle lens after edging has a film so that in one area A, at least a part of the film is absent, and in the other area B, the part of the film is present, the spectacles further including: a design pattern that is constituted due to a difference in appearance between the area A and the area B when a third party views the spectacle lens in a worn state from an object side, wherein a visible transmittance in the area A and a visible transmittance in the area B are both 80% or more, and an arithmetic mean roughness RaA of the area A is 0.2 μm or less.

An eighteenth aspect is the spectacles according to the seventeenth aspect, including: a lens base material having an optical surface; and an anti-reflection film that is a film coating the optical surface of the lens base material, the anti-reflection film having a multilayer structure including a laminate of a low refractive index layer and a high refractive index layer, and the anti-reflection film including a reactive layer that is relatively more reactive to irradiation with an ultrashort pulse laser than other layers included in the anti-reflection film, wherein in the area A, which is a removal portion resulting from at least partial removal of a predetermined layer including an outermost layer of the multilayer structure, the high refractive index layer below the reactive layer or the partially remaining reactive layer is exposed.

A nineteenth aspect is the spectacles according to the seventeenth or eighteenth aspect, wherein a difference between an appearance of the area A and an appearance of the area B includes a difference in a specular gloss due to reflected light, and a specular gloss of the area A is equal to or greater than the specular gloss of the area B.

A twentieth aspect is the spectacles according to any one of the seventeenth to nineteenth aspects, wherein a difference between an appearance of the area A and an appearance of the area B includes a difference in color due to reflected light.

A twenty-first aspect is the spectacles according to any one of the seventeenth to twentieth aspects, wherein when a third party views the spectacle lens in a worn state from an object side, and when the area A appears colored due to reflected light a, the area B also appears colored due to reflected light b.

A twenty-second aspect is the spectacles according to any one of the seventeenth to twenty-first aspects, including: a lens base material having an optical surface; and an anti-reflection film that is the film coating the optical surface of the lens substrate; the anti-reflection film having a high anti-reflection ability against some wavelengths of visible light, wherein a color of reflected light from the area B is a color of a wavelength of the visible light at which the anti-reflection ability is low, and a color of reflected light from the area A is a color of a wavelength of the visible light at which the anti-reflection ability is low when an outermost surface of the anti-reflection film is partially absent.

A twenty-third aspect is the spectacles according to any one of the seventeenth to twenty-second aspects, wherein a ratio of an arithmetic mean roughness RaA of the area A to an arithmetic mean roughness RaB of the area B (RaA/RaB) is 3 or less.

A twenty-fourth aspect is the spectacles according to any one of the seventeenth to twenty-third aspects, wherein the area A and the area B are both areas on the outermost surface of an object-side surface or an eyeball-side surface of the spectacle lens after edging.

A twenty-fifth aspect is the spectacles according to any one of the seventeenth to twenty-fourth aspects, wherein RaA is less than 0.0080 μm.

A twenty-sixth aspect is the spectacles according to any one of the seventeenth to twenty-five aspects, wherein the spectacle lens after edging has the area A present on a nose side and on a lower side when viewed from a lens center.

A twenty-seventh aspect is the spectacles according to any one of the seventeenth to twenty-sixth aspects, wherein the area A occupies 5% to 99% of an entire spectacle lens after edging.

A twenty-eighth aspect is the spectacles according to any one of the seventeenth to twenty-seventh aspects, wherein a maximum total length of a portion constituting the area A is 8 mm or more in a plan view.

A twenty-nineth aspect is the spectacles according to any one of the seventeenth to twenty-eighth aspects, wherein the anti-reflection film has a high anti-reflection ability against some wavelengths of visible light; a color of reflected light from the area B is a color of a wavelength of the visible light at which the anti-reflection ability is high; a color of reflected light from the area A is a color of a wavelength of the visible light at which the anti-reflection ability is low when an outermost surface of the anti-reflection film is partially absent; a difference between an appearance of the area A and an appearance of the area B includes a difference in a specular gloss due to reflected light; a specular gloss of the area A is equal to or greater than the specular gloss of the area B; RaA is less than 0.0080 μm; a ratio of an arithmetic mean roughness RaA of the area A to an arithmetic mean roughness RaB of the area B (RaA/RaB) is 3 or less; the spectacle lens after edging has the area A present on a nose side and on a lower side when viewed from a lens center; the area A occupies 10% or more and 99% or less of an entire spectacle lens after edging in a plan view; and a maximum total length of a portion constituting the area A is 8 mm or more in a plan view.

The following aspects may be combined in any desired manner.

An example of a specific position "on the nose side and on the lower side when viewed from the lens center" is either one of the following (1) and (2), or an overlapping area of these.

(1) An area from a nose end side to 0.90α (preferably 0.80α), wherein α is a width in a horizontal direction (lateral direction, x direction) of a rectangle (boxing) that circumscribes a spherical lens and contains the spherical lens.
(2) An area with a length of 0.90β (preferably 0.80β) with a frame center (= lens center) as a center, wherein β is a height in a vertical direction (vertical direction, y direction) in the boxing.

The area A may be present on the nose side and on the lower side when viewed from the lens center. Rather, from the viewpoint of improving fashionability, the area A may occupy 5% or more (or 10% or more, 15% or more, 20% or more) and 99% or less (or 70% or less, 50% or less) of an entire spectacle lens in a plan view.

From this viewpoint, it is preferable that the area A includes a portion with a solid finish of 10 mm$^2$ or more (or 20 mm$^2$ or more, 30 mm$^2$ or more, 50 mm$^2$ or more) in a plan view. That is, it is preferable that at least one area A is 10 mm$^2$ or more (or 20 mm$^2$ or more, 30 mm$^2$ or more, or 50 mm$^2$ or more).

From the same viewpoint, even when the portion constituting the area A is formed in a straight or curved shape in a plan view, it is preferable that a maximum total length is 8 mm or more (or 10 mm or more, or 15 mm or more). That is, the total length of at least one area A is preferably at least 8 mm (or 10 mm or more, or 15 mm or more). When a linear or curved area A is formed, the width thereof is preferably 100 μm or more, and more preferably 1 mm or more.

When an average transmittance over all wavelengths of visible light in the area A is **T1** (%) and an average transmittance over all wavelengths of visible light when the light passes through the area B is T2 (%), it is preferable that at least one of the following conditions be satisfied, for example.

- **T1** is 80 or more, preferably 85 or more.
- T2 is 80 or more, preferably 90 or more, more preferably 95 or more · The difference between T2 and **T1** is 15 or less.
- T1/T2 is 0.8 or more in a range of 430 to 780 nm.
- T1 is 80 or more in a range of 500 to 780 nm.
- T1-T2 is 20 or less, preferably 15 or less, 13 or less, or 10 or less in a range of 500 to 700 nm.
- T1-T2 is 18 or less in a range of 500 to 780 nm.

Further, a lens having the area A on the eyeball-side surface can satisfy at least one of the following conditions.

When the reflectance of the area A on the object-side surface is R1f, R1f is 7% or more, or 20% or less, more specifically 15% or less, and more preferably 10% or more and 15% or less in a wavelength range of 430 to 770 nm. An average reflectance of R1f over the wavelength range of 500 to 650 nm is 10% or more.

When the reflectance of the area B on the object-side surface is R2f, R1f ≥ R2f is satisfied, and the difference between R1f and R2f is 5% or more, and R2f ≤ 12% is satisfied, in a wavelength range of 430 to 770 nm. In a wavelength range of 500 to 650 nm, R2f ≤ 3% is satisfied. In a wavelength range of 500 to 600 nm, R1f - R2f ≥ 10% is satisfied.

When the reflectance from the area A on the eyeball-side surface is R1b, R1b is 7% or more, or 20% or less, more specifically 9% or more and 15% or less in a wavelength range of 430 to 770 nm. The average reflectance of R1b over the wavelength range of 430 to 770 nm is 10% or more. The average reflectance of R1b over the wavelength range of 500 to 650 nm is 10% or more.

When the reflectance from the area B on the eyeball-side surface is R2b, R1b ≥ R2b is satisfied, and the difference between R1b and R2b is 7% or more, and R2b ≤ 12% is satisfied, in a wavelength range of 430 to 770 nm. R2b ≤ 3% is satisfied in a wavelength range of 500 to 650 nm, and R1b - R2fb ≥ 10% is satisfied in a wavelength range of 500 to 600 nm.

An average value of R1f (of the processing portion when viewed from the object-side surface) over all wavelengths of visible light, that is, an average visible light reflectance, is preferably 7% or more, and more preferably 8% or more. An average value of R2f (of the unprocessing portion when viewed from the object side) over all wavelengths of visible light, that is, an average visible light reflectance, is preferably 3% or less. The difference between the average reflectances of both visible lights is preferably 5% or more.

When the processing portion (area A) is irradiated with light normal to the object-side surface and the brightness of the reflected light is defined as L*1 and the reflected light from the unprocessing portion (area B) is defined as L*2, L*1 > L*2 is preferable. Further, L*1 is preferably 30 or more, and more preferably 35 or more.

When the unprocessing portion (area B) is irradiated with the light normal to the object-side surface, the brightness L*2 of the reflected light is preferably 10 or less (or less than 10), and more preferably 5 or less (or less than 5). The brightness of the area A can be higher than that of the area B by 20 or more, preferably 30 or more.

It is preferable that the above-described preferable aspects regarding the brightness are the same when measured on the eyeball-side surface.

An example of the relationship between chromaticities a*1 and b*1 of the reflected light when the processing portion (area A) is irradiated with the light normal to the object-side surface and chromaticities a*2 and b*2 of the reflected light when the unprocessing portion (area B) is irradiated with the light normal to the object-side surface can be as follows:

- 

$$a * 1 \geq a * 2$$

- 

$$b * 1 > b * 2$$

- 

$$a * 1 > 0, \ b * 1 > 0, \ b * 2 < 0$$

Regarding the conductivity of the processing portion, even when an amount of charge increases from before laser processing (for example, -100 to +100 V), it is desirable to maintain an absolute value of less than 400 V, thereby maintaining an anti-static ability of the lens. Specifically, about - 300 to + 300 V is preferable, -200 to +200 V is more preferable, and -100 to +100 V is even more preferable.

Advantageous Effects of Invention

According to one embodiment of the present invention, the fashionability of the wearer when viewed by a third party can be improved, while ensuring a comfortable field of vision for the wearer.

Brief Description of Drawings

[Fig. **1**] Fig. 1 is a front view showing a spectacle lens according to one embodiment of the present invention.

[Fig. 2A] Fig. 2A is a schematic cross-sectional view (upper side) showing a processing portion and an unprocessing portion of the spectacle lens, and a lower side is an enlarged view of a portion surrounded by a dashed line, where the state of the processing portion is exaggerated.

[Fig. 2B] FIG. 2B is a schematic cross-sectional view showing a definition of "parallel to region B as a surface" based on FIG. 2A, where the state of the processing portion is exaggerated.

[Fig. 3] Fig. 3 is a schematic plan view showing one example of a specific position of "on the nose side and on the lower side when viewed from the lens center" in this embodiment.

[Fig. 4] Fig. 4 is a flow chart showing one example of a procedure of a spectacle lens manufacturing method according to this embodiment.

[Fig. 5] Fig. 5 is a cross-sectional side view showing an example of a laminate structure of thin films according to this embodiment.

[Fig. 6A] Fig. 6A is an explanatory view (part 1) showing a schematic configuration example of a laser processing device used in the spectacle lens manufacturing method according to this embodiment.

[Fig. 6B] Fig. 6B is an explanatory view (part 2) showing a schematic configuration example of the laser processing device used in the spectacle lens manufacturing method according to this embodiment.

[Fig. 7A] Fig. 7A is an explanatory view showing a configuration example of a main part of the spectacle lens according to this embodiment.

[Fig. 7B] Fig. 7B shows a specific example of an observation result of a cross section of an AR film 13, which is observed using an electron microscope.

[Fig. 8A] FIG. 8A is a photograph taken from the object-side surface of the spectacle lens according to the specific example, having the antireflection film shown in FIG. 7A provided on both sides thereof, showing processing of the eyeball-side surface using pulse laser light having a wavelength of 355 nm and a pulse width of 10 picoseconds or more and less than 20 picoseconds.

[Fig. 8B] Fig. 8B is a plot showing a transmittance (T'1) of the area A and a transmittance (T'2) of the area B in the spectacle lens according to a specific example, with a vertical axis representing transmittance (%) and a horizontal axis representing wavelength (nm).

[Fig. 8C] Fig. 8C is a plot showing the reflectance (R1f, R2f, R1b, R2b) of the spectacle lens according to the above specific example, with a vertical axis representing reflectance (%) and a horizontal axis representing wavelength (nm).

[Fig. 9] Fig. 9 shows a spectacle lens according to a specific example, and is a bar graph (vertical axis represents transmittance (%)) showing a visible transmittance when laser processing is performed from the eyeball-side to a sample having an anti-reflection film provided on both the object side and the eyeball side.

[Fig. 10] Fig. 10 shows a spectacle lens according to a specific example, and is a bar graph (vertical axis represents reflectance (%)) showing a reflectance when laser processing is performed from the eyeball side to the sample having an anti-reflection film provided on each of the object-side and eyeball-side surfaces by irradiation of the light from the normal direction of the object-side surface toward the object-side surface to be reflected in the normal direction.

[Fig. 11] Fig. 11 shows the spectacle lens according to a specific example, and is a bar graph (vertical axis represents brightness) showing the brightness L* when laser processing is performed to the sample having an anti-reflection film provided on both the object side by irradiating the eyeball-side surface with light from the normal direction on the object-side surface toward the object-side surface.

[Fig. 12] Fig. 12 shows a spectacle lens according to a specific example, and is a bar graph (vertical axis represents chromaticity) showing the chromaticities a* and b* when laser processing is performed from the eyeball side to the sample having an anti-reflection film on each of the object-side and eyeball-side surfaces by irradiation of light from the normal direction of the object-side surface toward the object-side surface.

[Fig. 13] Fig. 13 shows a spectacle lens according to a specific example, and is a bar graph (vertical axis represents a charge amount) showing an amount of charge (unit: V) on the eyeball-side surface (laser-processing side) of a sample having an anti-reflection film on each of the object-side and eyeball-side surfaces.

Description of Embodiments

<Spectacle lens according to this embodiment>

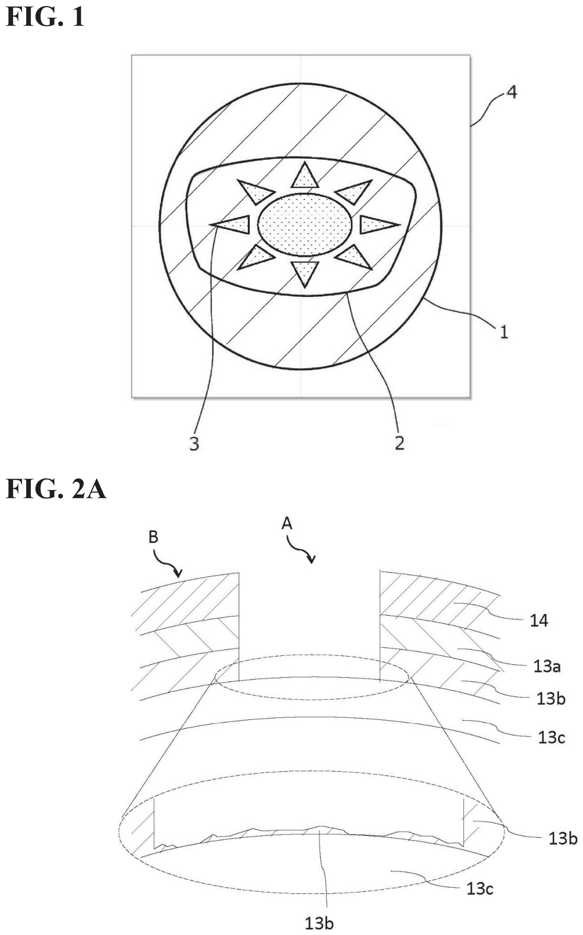

Fig. 1 is a front view showing a spectacle lens according to one embodiment of the present invention.

The spectacle lens according to this embodiment has, as optical surfaces, an object-side surface and an eyeball-side surface. The "object-side surface" is the surface that is located on the object side when a wearer wears spectacles equipped with spectacle lenses. The "eyeball-side surface" is the opposite, that is, the surface that is located on the eyeball side when a wearer wears spectacles equipped with spectacle lenses. Generally, the object-side surface is convex and the eyeball-side surface is concave, that is, the spectacle lens is a meniscus lens. This also applies to the spectacle lens after edging (lens after processing), in which a peripheral edge is cut to fit the shape into a spectacle frame.

This specification shows an example in which laser processing is performed to the anti-reflection film on the eyeball-side surface, but the present invention is not limited to this example, and laser processing may also be performed to an anti-reflection film on the object-side surface.

In this specification, an optical center side of the spectacle lens is referred to as an inside, and an outermost edge side of the spectacle lens is referred to as an outside. This specification shows an example in which the optical center coincides with a geometric center and a centering center. Hereinafter, the optical center will also be referred to as a lens center.

In this specification, a left-right direction in a direction when a third party faces the object-side surface from the front (hereinafter referred to as plan view) is defined as x-direction, an up-down direction is defined as y-direction, and a thickness direction of the spectacle lens, which is perpendicular to the x-direction and y-directions, is defined as z-direction. The z direction is also an optical axis direction of the spectacle lens. An origin is the lens center, which refers to the optical center or the geometric center of the spectacle lens. This specification shows a case in which the optical center and the geometric center substantially coincide with each other. The right (3 o'clock direction) is the +x direction, the left (9 o'clock direction) is the -x direction, the top (0 o'clock direction) is the +y direction, the bottom (6 o'clock direction) is the -y direction, the direction toward the object side is the +z direction, and the opposite direction (toward the back) is the -z direction. The x-direction is also called the x-axis, the y-direction is also called the y-axis, and the z-direction is also called the z-axis. The content of this paragraph can be rephrased as follows. "When wearing spectacle lenses, the axis passing through the lens center from the object side toward the eyeball side is the z-axis, the axis extending from bottom to top and perpendicular to the z-axis is the y-axis, and the axis extending from left to right and perpendicular to the z-axis is the x-axis."

In this specification, unless otherwise specified, the situation will be discussed when a third party looks straight at a person wearing the spectacles.

In this specification, "the appearance of the area A and the appearance of the area B when a third party views the spectacle lens in a worn state from the object-side surface" includes the appearance of the spectacle lens when a third party views the spectacle lens in a state in which light (illumination light, sunlight, etc.) is incident on the object side of the spectacle lens and reflected light enters a third party's eyes.

When the spectacle lens is placed on a table, the object-side surface or the eyeball-side surface faces a heavenly direction of heaven and earth. Therefore, discussing the configuration of each surface of the spectacle lens is based on a plan view.

In a frame-cut spherical lens, the frame center side is called the inside, and the outermost edge side of the spherical lens is called the outside. The contour of the outermost edge of the spherical lens matches the contour of the spherical shape of the spectacle lens before it is cut into a frame (in other words, an uncut lens). As the name suggests, the frame center is the center position of the spherical lens (i.e., an area within a rim) when a third party views straight the spectacles in a worn state. The center position of the spherical lens may be the geometric center of a rectangle (boxing) that circumscribes the spherical lens and contains the spherical lens. The frame center may coincide with the optical center or the centering center. In the following definition regarding a spectacle lens, the expression "lens center" is used. However, in the case of the spectacles in which a spherical lens is fitted into a frame after frame cutting, the "lens center" can be replaced with the "frame center."

The spectacle lens according to this embodiment is preferably the spectacle lens including: an object-side surface and an eyeball-side surface, wherein in an area within a spectacle frame, in two areas A and B in a plan view on one surface of the spectacle lens, the spectacle lens has a film so that in one area A, at least a part of the film is absent, and in the other area B, the part of the film is present, the spectacles further including: a design pattern that is constituted due to a difference in appearance between the area A and the area B when a third party views the spectacle lens in a worn state from an object side, wherein an average transmittance of visible light over all wavelengths in the area A and an average transmittance of visible light over all wavelengths when the light passes through the area B are both 80% or more, and an arithmetic mean roughness RaA of the area A is 0.2 $\mu$m or less (configuration 1).

One of the features of the spectacle lens described below is the configuration within the area inside the spectacle frame. Even when the spectacle lens is an uncut lens, if the purchaser (future wearer) has already decided on the type of a spectacle lens and frame (rim type) at a spectacles shop, the area within the spectacle frame can be identified from the spectacle lens.

Normally, at least a part of the area with a radius of 30 mm from the lens center is within the frame of the spectacles, and the configuration within this area may have the features of this embodiment.

The spectacle lens according to this embodiment includes a film configured so that in one area A, at least a part of the film is absent, and in the other area B, the part of the film is present.

The film does not have to be an anti-reflection film as described below, but may be an optical interference film such as a film that enhances reflectivity. For example, when the film satisfies the above-described configuration 1 and the arithmetic mean roughness RaA of the area A is 0.2 $\mu$m or less, it may be a metal film that does not have an anti-reflection function or has a low anti-reflection function. The metal film may be a multilayer film or a single layer film, and the compositions of adjacent layers in the multilayer film may be different from each other. In the case of the single layer film, a part of the single layer film may be removed.

The film may be an existing anti-reflection film with an arbitrary film further provided thereon. In this case, the area A may be composed of the existing anti-reflection film, and the area B may be composed of the arbitrary film. When providing the arbitrary film, a known wet or dry deposition method may be used.

"Two areas A and B in a plan view on one surface of the spectacle lens" refers to two areas A and B in a plan view on the surface that causes a change in the film (the eyeball-side surface in this example), but the areas on the back side (object side) that correspond to the areas A and B may also be called areas A and B in the same way.

The following will show the case in which the film is an anti-reflection film. Hereinafter, the anti-reflection film will also be referred to as an AR film. In this case, the spectacle lens according to this embodiment includes: a lens base material having an optical surface; and an anti-reflection film that is a film coating the optical surface of the lens substrate, the anti-reflection film having a multilayer structure including a laminate of a low refractive index layer and a high refractive index layer, and the anti-reflection film including a reactive layer that is relatively more reactive to irradiation with an ultrashort pulse laser than other layers included in the anti-reflection film, wherein in the area A, which is a removal portion resulting from at least partial removal of a predetermined layer including an outermost layer of the multilayer structure, the high refractive index layer below the reactive layer or a part of the remaining reactive layer is exposed.

A specific configuration example of the AR film and a specific configuration example of the processing method using an ultrashort pulse laser will be described later.

In the spectacle lens according to the above-described example, the area A is a portion where the AR film is imperfect because a part of the film has been removed. The area B is a portion where a predetermined layer has not been removed (a portion where the AR film is perfect).

In the spectacle lens according to this embodiment, the average transmittance over all wavelengths of visible light in the area A and the average transmittance over wavelengths of visible light when the light passes through the area B are both 80% or more. Preferably, the visible transmittance through each of the areas A and B is 80% or more, and more preferably 85% or more.

The "visible transmittance" in this specification is a value obtained by measurement in accordance with JIS T 7333:2018 (ISO 8980-3:2013). The "visible transmittance through the area A" refers to the visible transmittance when a wearer looks ahead through the area A, and similarly, the "visible transmittance through the area B" refers to the visible transmittance when a wearer looks ahead through the area B, and these are significant in ensuring a clear field of vision for the wearer.

In this specification, the "visible light" refers to the light with a wavelength range of 380 to 780 nm. In this specification, the "average transmittance over all wavelengths of visible light" refers to the average value of the transmittance at each wavelength from 380 to 780 nm. This embodiment shows a case in which the average transmittance over all wavelengths of visible light is 80% or more, but preferably, the transmittance is 80% or more at any wavelength between 380 and 780 nm, and the transmittance over all wavelengths of visible light is 80% or more.

Since the AR film of the spectacle lens has an average transmittance sufficient for practical use, the average transmittance is naturally high in **the area** B where the AR film is perfect. Although the AR film in the area A is imperfect, it is still an AR film, and a high average transmittance can be ensured by removing only a predetermined layer near the outermost surface of the AR film. **In** other words, the number or thickness of layers to be removed in the area A may be set to such an extent that the average transmittance is 80% or more (to such an extent that the transmission ability of the anti-reflection film is not excessively impaired).

**In** the laser processing, the anti-reflection film is removed layer by layer (even when some of the layers remain or some of the underlying layers are removed). Therefore, the laser-processed area A has a shape that follows the shape of the area B, which is a perfect anti-reflection film (in the first place, both area A and area B have shapes that follow the shape of the surface of the lens base material). The thickness of each layer that constitutes the anti-reflection film is on the order of nanometers, and further, only a few layers at most have been removed in the area A, so the surface shape of the area A is similar to that of the area B. This similar state is expressed as "parallel to the area B as a surface."

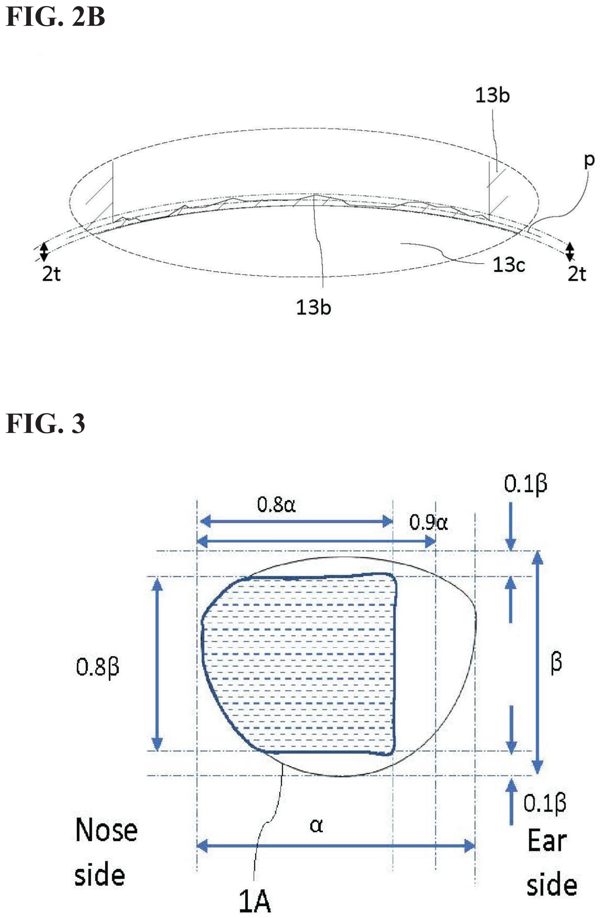

This degree of parallelism can be expressed as a specific numerical value as follows: for example, when the curved surface that constitutes the area B is translated as an imaginary plane p and overlapped with the area A, the area A that falls within a space (a distance t from p in the + z direction plus a distance t from p in the -z direction is 2t) where the distance t from the imaginary plane p in a lens thickness direction (or optical axis direction, z direction) is 0.2 $\mu$m or less, 0.1 $\mu$m or less, 0.05 $\mu$m or less, 0.01 $\mu$m or less, less than 0.0080 $\mu$m, 0.005 $\mu$m or less, or 0.003 $\mu$m or less, may be regarded as an "area that is parallel to the area B as a surface." Fig. 2A is a schematic cross-sectional view (upper side) showing a processing portion and an unprocessing portion of the spectacle lens, and the lower side is an enlarged view of the portion surrounded by a dashed line. The configuration and symbols shown in Fig. 2A conform to <Further specific example of spectacle lens>. Fig. 2B is a schematic cross-sectional view showing the definition of "parallel to the area B as a surface" based on Fig. 2A.

The arithmetic mean roughness RaA of the area A is 0.2 $\mu$m or less. In the spectacle lens according to this embodiment, the surface roughness of the area A is equal to or smoother than the area B, which has not been subjected to laser processing. That is, from the viewpoint of surface roughness, specular reflectance is predominantly caused in the area A, and sufficient light is allowed to reach the pupil of a third party to visually recognize the design in the area A. At the same time, the surface roughness of the laser-processing portion can be controlled taking into account the surface roughness of the portion that has not been laser-processed, so that both portions form a design pattern when a third party views the wearer.

Hereinafter, the portion that has been laser processed will also be referred to as the processing portion, and the portion that has not been laser processed will also be referred to as the unprocessing portion.

The laser processing described in Patent Literature 2 describes marking of a decorative pattern representing a logo, house mark, or the like on an optical surface. When these are intended to indicate a manufacturer of the spectacle lens, then at least for the wearer, the logo and house mark provided within the frame area should be as inconspicuous as possible unless there is a special intention to do so.

On the other hand, in this embodiment, the processing portion is distinguished from the unprocessing portion to achieve a design effect, or both the processing portion and the unprocessing portion constitute a design pattern. Therefore, the arithmetic mean roughness RaA of the area A is set to a smoothness (mirror surface) equal to or greater than the surface roughness of a normal spectacle lens, which is 0.2 $\mu$m or less.

The arithmetic mean roughness RaA of the area A is 0.2 $\mu$m or less. It is preferable that this area A has an area that allows the arithmetic mean roughness to be measured independently. Of course, it is probable for the processing portions to be scattered around, like triangles around a central circle in the picture of the sun in Fig. 1. Even in this case, it is preferable that at least one of the scattered parts (solid processing, continuous processing) has an area or length that allows the arithmetic mean roughness to be measured. For example, the proportion of the area A in a plan view may be 80% or more, 85% or more, or 90% or more.

The arithmetic mean roughness in this specification may be a value obtained by a known surface roughness measuring device (for example, Talysurf (registered trademark)).

As described above, Ra of 0.2 $\mu$m or less means a mirror-finished state having a smoothness equal to or greater than the surface roughness after mirror-finishing of the lens base material before each film is formed. This mirror-finished state is realized on the surface of the area A, which is different from a situation where it is realized in a processing portion such as a pinhole that has only a side wall and a curved bottom.

When creating the surface called area A using the ultrashort pulse laser, the film is irradiated with a laser that forms a substantially circular irradiation spot in a plan view, the film is moved slightly (by a predetermined pitch) in one direction (for example, the x direction), and the film at the moved position is irradiated with the laser. After repeating this process, the film is moved in another direction (for example, the y direction), and the laser irradiation is repeated in that direction (for example, the x direction).

In order to create the surface called area A, the spots are allowed to overlap each other. Unless there is an idea to control Ra in the surface of the area A, difference will occur in the integrated amount of laser light at various points on the surface of the area A, making it difficult to obtain Ra equivalent to that of a mirror surface. Such control can generally be performed taking into consideration the characteristics of the beam produced by the laser irradiation and the physical properties of the object to be processed. However, since the object to be processed in this embodiment is a spectacle lens, and a preferable embodiment is a part of the thin film formed on the surface of the spectacle lens, and the thin film is formed on a curved surface, therefore, irradiation needs to be performed accordingly.

In the present invention, it is essential that when a third party views the spectacle lens worn by the wearer, the processing portion can be visually distinguished from the unprocessing portion, and at this time, based on a technical concept that the unprocessing portion can also be configured as a part of the design pattern, the area A and the area B are treated equally. Therefore, the surface roughness of the area A is required to be equal to or greater than that of the area B, which is a perfect anti-reflection film.

"The difference between the appearance of the area A and the appearance of the area B" will be described in detail below.

In the spectacle lens according to this embodiment, as described above, the average transmittance over all wavelengths of visible light passing through the area A and the average transmittance over all wavelengths of visible light when that light passes through the area B are both 80% or more. Further, the visible transmittance can be 80% or more, preferably 85% or more. On the other hand, the spectacle lens according to this embodiment has a design pattern that is constituted due to a difference between the appearance of the area A and the appearance of the area B when a third party views the spectacle lens in a worn state from the object side.

This design pattern is visible because, for example, the reflection properties in the area A are different from those in the area B. **In** this case, in the area A, as described above, the Ra value of the area A causes specular reflectance due to an extremely smooth mirror surface. Therefore, when a third party views the lens of the wearer, the design pattern resulting from the decorative design pattern can be clearly viewed at a position where a third party receives a reflected light from a light source (illumination light or external light). Meanwhile, the design pattern is not visible at a position where the reflected light does not reach a third party. That is, the design pattern according to this embodiment can be more or less visible (visibility changes) depending on a relative position of the light source, the wearer, and third party (often an accidental position), allowing for design innovation.

**In** this case, when an irradiated area by the light source is wide, the design pattern is visible over a wide range, so the visibility of the design pattern by external light may be different from that under indoor lighting, allowing for varied designs to be incorporated into fashion.

**In** order for a third party to be able to clearly distinguish the area A from the area B and to easily view the design pattern, the following case can be considered: the area A has a reflectance above a certain level, and the area A has a high degree of smoothness and strong specular reflectance, as described above, causing it to emit a different brilliance from the area B. Also, the following case can be considered: the brightness in the area A is higher than that in the area B, or a color tone (hue and/or saturation) of the area A as its appearance is different from that of the area B. For example, a contrast can be provided such that the hue in the area A is warm and the hue in the area B is cool. These design effects can be obtained by designing the anti-reflection film and designing a material and a film thickness of a part of the film that is removed in the area A (thin film design software can be applied). As described above, it is also important that the area A is not a very small area, but has a predetermined or larger "area" that is easily visible.

When the decorative design pattern is present within the wearer's field of vision, there is substantially no inconvenience such as reflected light from the design pattern entering wearer's eyes and being visible, thereby interfering with a wearer's natural field of vision. This is because the light incident from the eyeball side of the lens is specularly reflected by the design pattern, but this reflected light is unlikely to reach a wearer's pupil. Further, one of the factors that brings about this effect is the smoothness of the design pattern (that is, the smoothness of not only the area B that is the unprocessing portion but also the area A that is the processing portion).

Of course, it goes without saying that the high transmittance as described above ensures that the wearer's field of vision is always maintained.

However, as will be shown in the Examples section below, even in the reflection properties in the area B (perfect anti-reflection film), by exhibiting a relatively high reflectance at a specific wavelength of the visible light, the reflection color of the anti-reflection film can be controlled. A third party receives the light reflected from the area A and the area B simultaneously and can visually recognize the difference in color and brightness in accordance with wavelength properties of each. Further, in the area A, due to its high specularity (i.e., low diffuse reflection), there is also an effect of allowing the contours of the intricate design to be clearly visible. These effects are brought about because the spectacle lens is provided with a design pattern that integrates the area A that is the processing portion and the area B that is the unprocessing portion.

The difference between the appearance of the area A and the appearance of the area B includes the difference in specular gloss due to reflected light, and the specular gloss of the area A may be equal to or greater than the specular gloss of the area B. The "specular gloss" in this specification may be the specular gloss specified in ISO 2813/JIS K 5600-4-7. In measuring the specularity, the incident angle can be, for example, 60 degrees. The specular gloss of the area A can be, for example, 80 or more, and more preferably 90 or more. Here, "the specular gloss of the area A is equivalent to the specular gloss of the area B" can be defined as the difference in specular gloss between the two areas being less than 5.

"Color" in this specification can be defined by the CIE 1976 L*a*b* color space and can be defined by values obtained by measurement in accordance with JIS Z 8781-4:2013 (ISO 11664-4).

The difference between the appearance of the area A and the appearance of the area B may include a difference in color due to reflected light. Although either area A or area B may appear colorless when viewed by a third party, it is preferable that both areas appear colored, from the viewpoints of ease of identification and improved fashionability. That is, when a third party views the spectacle lens in a worn state from the object side, it is preferable that when the area A appears colored due to reflected light a, the area B also appears colored due to reflected light b.

The anti-reflection film is a film that has a high anti-reflection ability for a predetermined range of wavelengths of visible light (in other words, a predetermined wavelength area). On the other hand, the anti-reflection film may have a portion where the anti-reflection ability is low to a certain degree for some wavelengths of visible light, and the reflectance at the certain wavelengths may be relatively higher than the reflectance at other wavelengths. Nevertheless, the average transmittance in the area B over all wavelengths of visible light is 80% or more, and this characteristic is the same in the area A where a part of the film is absent.

That is, the color of the reflected light in the area B may be the color of the wavelength of visible light with a relatively low anti-reflection ability, while the color of the reflected light in the area A is the color of the wavelength of visible light with a low anti-reflection ability when the outermost surface of the anti-reflection film is partially absent.

The "color of a wavelength with a low anti-reflection ability" referred to here is the color of the wavelength of a predetermined range that is visually recognized by a third party when the reflectance is relatively high in that range. On the other hand, of course, there may be a case where the reflectance is relatively high in a plurality of predetermined ranges. In this case, a third party can visually recognize a mixture of colors of the wavelengths of the plurality of ranges. In this specification, "colors of the wavelength with low anti-reflection ability" also includes such mixed colors.

In this specification, "colored" includes not only colors (e.g., blue, green, purple, pearl) due to the action of the AR film, but also the color of the decorative portion (gold, silver, or other colors when recognized visually). When the reflected light from the area A enters the eyes of a third party, its brilliance is visually recognized due to the combination of the difference in reflectivity between A and B (A is more reflective) and the Ra factor (high smoothness and mirror finish).

The ratio of the arithmetic mean roughness RaA of the area A to the arithmetic mean roughness RaB of the area B (RaA/RaB) is 3 or less. The lower limit is 1. The definition of this paragraph is intended to bring the surface roughness of the processing portion and the unprocessing portion closer together.

It is preferable that both the area A and the area B are the outermost surface areas. However, the present invention is not limited to the contents of this paragraph. For example, an antifouling film may be separately provided in the area A that is the processing portion and the area B that is the unprocessing portion by wet or dry coating. However, even when a new film is provided, it is preferable to make it thin in order to maintain the above-described configuration 1 of this embodiment. For example, the thickness of a new film is preferably 100 nm or less (or 50 nm or less, 30 nm or less, or 20 nm or less). With this thinness, the arithmetic mean roughness of the area A and the area B is approximately the same as the arithmetic mean roughness interposing the new film.

Preferably, RaA is less than 0.0080 $\mu$m. Alternatively, RaA may be 0.1 $\mu$m or less, 0.05 $\mu$m or less, 0.01 $\mu$m or less, 0.005 $\mu$m or less, or 0.003 $\mu$m or less. The

numerical range described in this paragraph may also apply to RaB.

The spectacle lens according to this embodiment can improve the fashionability of the wearer when viewed by a third party while ensuring a comfortable field of vision for the wearer. As described above as a finding of the present invention, the present invention significantly expands the degree of freedom of the design pattern. That is, conventionally, when decorating the spectacle lens with decorative parts or motifs, it has been required to avoid an area through which the wearer's line of sight frequently passes (specifically, an area on the nose side and/or on the lower side when viewed from the lens center). Decoration processing of this embodiment does not obstruct the wearer's field of vision, so the lens surface can be freely designed without considering such constraints, and there is no problem even when a part or all of the design is arranged in the portion through which the wearer's line of sight passes. That is, the area A may be present on the nose side and on the lower side when viewed from the lens center, and this is actually preferable from the viewpoint of improving fashionability.

Incidentally, even with the uncut lens, directions such as nose side and the lower side can be identified from a hidden mark provided on the spectacle lens. The lens center can also be identified in a similar manner. This hidden mark, like the design pattern, may be formed by applying a specific example of the laser processing as a spectacle lens manufacturing method, which will be described later.

The prescription data for the wearer's information is written on a lens bag of the uncut lens. The lens bag at least indicates whether it is for a right eye or a left eye. With the lens bag, which side is the nose side can be identified when viewing the spectacle lens in a plan view.

Fig. 3 is a schematic plan view showing an example of a specific position of "on the nose side and on the lower side when viewed from the lens center" in this embodiment. The example of a specific position "on the nose side and on the lower side when viewed from the lens center" is either one of the following (1) and (2), or an overlapping area of these.

(1) The area from a nose end to 0.90$\alpha$ (preferably 0.80$\alpha$), wherein $\alpha$ is a width in a horizontal direction (lateral direction, x direction) of a rectangle (boxing) that circumscribes and contains the spherical lens.
(2) The area with a length of 0.90$\beta$ (preferably 0.80$\beta$) with a frame center (= lens center) as a center, wherein $\beta$ a height in a vertical direction (vertical direction, y direction) in the boxing.

The area A may be present on the nose side and/or on the lower side when viewed from the lens center, and rather, from the viewpoint of improving fashionability, the area A may occupy 5% or more (or 10% or more, 15% or more, 20% or more) and 99% or less (or 70% or less, 50% or less) of an entire spectacle lens in a plan view.

The spectacle lens of this embodiment is not only excellent in terms of fashionability. As described above, the processing portion according to this embodiment does not impair transparency even when it is within a wearer's field of vision. On the other hand, when the surface roughness is large, the refraction and diffuse reflection of incident light at that portion can be viewed as distortion or scratches in the field of vision. Further, when the surface roughness is large, light interference occurs in that portion, causing unevenness and glare in the design pattern when viewed by a third party. That is, by having excellent smoothness, such an inconvenience can be avoided, and the spectacle lens that can be considered high quality by both the wearer and third party can be provided. Another advantage is that due to its excellent smoothness, even a fine and intricate design pattern can be clearly viewed by a third party.

Further, in order for the design pattern in the area A to be easily visible to a third party, it is desirable that it contains a solid finish (a continuous finish surface) for a predetermined area. From this viewpoint, it is preferable that the area A includes a portion where the area of the solid finish is 10 mm$^2$ or more (or 20 mm$^2$ or more, 30 mm$^2$ or more, 50 mm$^2$ or more) in a plan view. That is, it is preferable that at least one area A is 10 mm$^2$ or more (or 20 mm$^2$ or more, 30 mm$^2$ or more, 50 mm$^2$ or more).

From the same viewpoint, even when the portion constituting the area A is formed in a straight or curved shape in a plan view, it is preferable that a maximum total length is 8 mm or more (or 10 mm or more, or 15 mm or more). That is, the total length of at least one area A is preferably at least 8 mm (or 10 mm or more, or 15 mm or more). Further, when the portion constituting the area A is formed in a straight or curved shape, the width thereof is preferably 100 $\mu$m or more, and more preferably 1 mm or more.

When the average transmittance over all wavelengths of visible light in the area A is **T1** (%) and the average transmittance over all wavelengths of visible light when the light passes through area B is T2 (%), it is preferable that at least one of the following conditions be satisfied, for example:

· T1 is 80 or more, preferably 85 or more.
· T2 is 80 or more, preferably 90 or more, more preferably 95 or more.
· The difference between T2 and **T1** is 15 or less.
· T1/T2 is 0.8 or more in a range of 430 to 780 nm.
· T1 is 80 or more in a range of 500 to 780 nm.
· T1 - T2 is 20 or less, preferably 15 or less, 13 or less, or 10 or less in a range of 500 to 700 nm.
· T1 - T2 is 18 or less in a range of 500 to 780 nm.

With the above configuration, even when both are within the wearer's field of vision, they are unlikely to obstruct the wearer's field of vision, and a wide, bright, and clear field of vision can be obtained. Further, a lens having the area A on the eyeball-side surface can satisfy at least one of the following conditions.

Each reflectance is expressed as follows:

· R1f: Reflectance of reflected light from the object-side surface when the processing portion (area A) is irradiated with the light normal to the object-side surface.
· R2f: Reflectance of reflected light from the object-side surface when the unprocessing portion (area B) is irradiated with the light normal to the object-side surface.
· R1b: Reflectance of reflected light from the eyeball-side surface (the surface where laser processing was performed) when the processing portion (area A) is irradiated with the light normal to the eyeball-side surface.
· R2b: Reflectance of reflected light from the eyeball-side surface when the unprocessing portion (area B) is irradiated with the light normal to the eyeball-side surface (the surface where laser processing was performed).

In addition, it is preferable that each reflectance satisfies the following definitions.

In the wavelength range of 430 to 770 nm, R1f is 7% or more, or 20% or less, and more specifically 15% or less. More preferably, it is 10% or more and 15% or less. The average reflectance of R1f over the wavelength range of 500 to 650 nm is 10% or more.

In the wavelength range of 430 to 770 nm, R1f $\geq$ R2f is satisfied, the difference between R1f and R2f is 5% or more, and R2f $\leq$ 12% is satisfied. In the wavelength range of 500 to 650 nm, R2f $\leq$ 3% is satisfied. In the wavelength range of 500 to 600 nm, R1f - R2f $\geq$ 10% is satisfied.

In the wavelength range of 430 to 770 nm, R1b is 7% or more, or 20% or less, more specifically 9% or more and 15% or less. The average reflectance of R1b over the wavelength range of 430 to 770 nm is 10% or more. The average reflectance of R1b over the wavelength range of 500 to 650 nm is 10% or more.

In the wavelength range of 430 to 770 nm, R1b $\geq$ R2b is satisfied, the difference between R1b and R2b is 7% or more, and R2b $\leq$ 12% is satisfied. In the wavelength range of 500 to 650 nm, R2b $\leq$ 3% is satisfied. In the wavelength range of 500 to 600 nm, R1b - R2fb $\geq$ 10% is satisfied.

In this embodiment, the eyeball-side surface is described as a decorative surface that has been processed, but even when the object-side surface is used as a decorative surface, the reflection properties on the object side can have similar values.

The average value of R1f (of the processing portion when viewed from the object-side surface) over all wavelengths of visible light, that is, the average visible light reflectance, is preferably 7% or more, and more preferably 8% or more. The average value of R2f (of the unprocessing portion when viewed from the object side) over all wavelengths of visible light, that is, the average visible light reflectance, is preferably 3% or less. The difference between the average reflectances of both visible light beams is preferably 5% or more.

When the processing portion (area A) is irradiated with the light normal to the object-side surface and the brightness of the reflected light is defined as $L*1$ and the brightness of the reflected light from the unprocessing portion (area B) is defined as $L*2$, then, $L*1 > L*2$ is preferable. Further, $L*1$ is preferably 30 or more, and more preferably 35 or more. The brightness $L*1$ of the reflected light when the unprocessing portion (area B) is irradiated with the light normal to the object-side surface is preferably 10 or less, and more preferably 5 or less. The brightness of the area A can be higher than that of the area B by 20 or more, preferably 30 or more. It is preferable that the above-described preferable aspects regarding brightness are the same when measured on the eyeball-side surface.

An example of the relationship between the chromaticities $a*1$ and $b*1$ of the reflected light when the processing portion (area A) is irradiated with the light normal to the object-side surface, and the chromaticities $a*2$ and $b*2$ of the reflected light when the unprocessing portion (area B) is irradiated with the light normal to the object-side surface is as follows:

-

$$a*1 \geq a*2$$

-

$$b*1 > b*2$$

-

$$a*1 > 0, \ b*1 > 0, \ b*2 < 0$$

In this case, the area A has a warm color hue and the area B has a cool color hue, and a contrast between the two areas makes the design pattern easier to view.

Regarding the conductivity of the processing portion, even when the amount of charge increases from before laser processing (for example, -100 to +100 V), it is desirable to maintain the anti-static ability of the lens by keeping the absolute value below 400 V. Approximately -300 to +300 V is preferable, -200 to +200V is more preferable, and -100 to +100V is even more preferable. From this viewpoint, when the above-described reactive layer is conductive, it is desirable that a part of this layer remains.

The technical concept of the present invention can also be applied to spectacles including a spectacle frame and a spectacle lens after edging having an object-side surface and an eyeball-side surface. The above-described contents can be applied to the spectacles by replacing the "spectacle lens" described above with "spectacle lens after edging."

The spectacle frame may be a regular full-rim type, or a rimless or half-rim type (this type includes a spectacle frame in which there is no rim even in a part around a periphery of the spectacle lens after edging).

<Spectacle lens manufacturing method according to this embodiment>

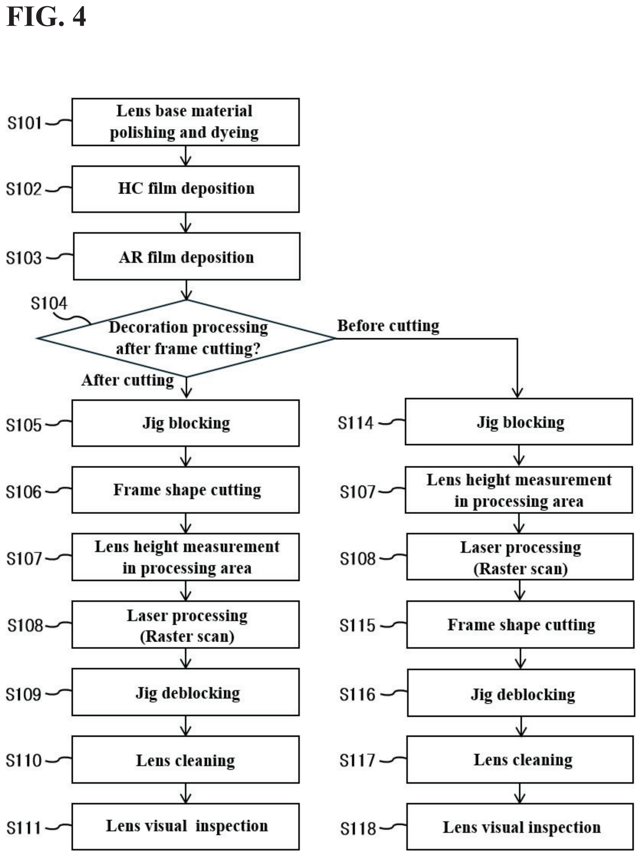

Fig. 4 is a flow chart showing an example of the procedure of the spectacle lens manufacturing method according to this embodiment.

In the manufacture of the spectacle lens, first, a lens base material, which is an optical base material, is prepared, and then the lens base material is polished according to prescription information of the spectacle wearer, and dyed as needed (step 101; hereinafter, step will be abbreviated as "S"). The lens base material is composed of a resin material having a refractive index (nD) of about 1.50 to 1.74, for example. Specifically, examples of the resin material include allyl diglycol carbonate, urethane resin, polycarbonate, thiourethane resin, and episulfide resin. By applying the above-described laser irradiation to the thin film provided on these resins, the surface to be processed can be made smooth and precise design processing can be achieved. However, instead of these resin materials, the lens may be composed of other resin materials that can provide a desired refractive index, or may be composed of inorganic glass. The lens base material also has optical surfaces for forming a predetermined lens shape on both the object-side surface and the eyeball-side surface. The predetermined lens shape may be a single-focus lens, a multifocal lens, a progressive power lens, or the like, but in any case, each optical surface is formed by a curved surface specified based on the prescription information of the spectacle wearer. The optical surface is formed by, for example, a polishing, but may also be a cast (molded) product that does not require polishing. The polishing and dyeing of the lens base material may be performed using a known technique, and detailed description thereof will be omitted here.

Thereafter, a hard coat film (HC film) is formed on at least one optical surface, preferably on both optical surfaces of the lens base material (S102). The HC film is composed of a curable material containing, for example, a silicon compound, and is a film formed to a thickness of about 3 $\mu$m to 4 $\mu$m. The refractive index (nD) of the HC film is close to the refractive index of the material of the lens base material as described above, for example, about 1.49 to 1.74, and the film configuration is selected depending on the material of the lens base material. Such a coating of the HC film can improve the durability of the spectacle lens. The HC film can be formed, for example, by a dipping method using a solution in which a curable material containing a silicon compound is dissolved.

After the HC film is formed, an anti-reflection film (AR film) is next formed so as to overlap the HC film (S103). The AR film has a multilayer structure in which films with different refractive indices are laminated, and is a film that prevents light reflection by interference action. Specifically, the AR film has a multilayer structure in which a low refractive index layer and a high refractive index layer are laminated. The low refractive index layer is composed of, for example, silicon dioxide ($SiO_2$) with a refractive index of about 1.43 to 1.47. The high refractive index layer is composed of a material having a higher refractive index than the low refractive index layer, such as zirconium oxide ($ZrO_2$), tin oxide ($SnO_2$), niobium oxide ($Nb_2O_5$), tantalum oxide ($Ta_2O_5$), titanium oxide ($TiO_2$), yttrium oxide ($Y_2O_3$), aluminum oxide ($Al_2O_3$), or a mixture thereof (e.g., indium tin oxide (ITO)).

Of these, the high refractive index layer containing Sn and O has a higher reactivity to an ultrashort pulse laser described below than the other layers, and therefore functions as a reactive layer. Specifically, the above-described $SnO_2$ and ITO fall into this category.

In this specification, the term "reactive layer" refers to a layer that has low excitation energy when irradiated with a laser. In one example of the present invention, the layer is irradiated with an ultrashort pulse laser. The $SnO_2$ layer, which can be a reactive layer, has extremely low excitation energy due to multiphoton absorption (for example, two-photon absorption), and is highly reactive. The same applies to the ITO layer, and the ITO layer can also be the reactive layer in this specification. As a result, according to one example of the present invention, at least a part of the $SnO_2$ layer (or ITO layer) sublimes or evaporates, and disappears from the irradiated area together with the $SiO_2$ layer on the upper layer side. According to one example of the present invention, the reactive layer having a higher reactivity than other layers included in the multilayer structure is a $SnO_2$ layer or an ITO layer. The reactive layer may be configured to be the most reactive layer relative to other layers in the multilayer structure.

The outermost layer of the AR film in the multilayer structure is configured to be a low refractive index layer (for example, a $SiO_2$ layer). By coating the design pattern of this embodiment with such an AR film, the visibility can be improved due to the difference in reflectivity of visible light caused by irradiation of the illumination light.

Further, it is preferable that a bottom layer (on the base material side) of the multilayer structure is also a low refractive index layer (for example, a $SiO_2$ layer).

The AR film may be formed by, for example, ion-assisted deposition.

A water-repellent film may be formed on the low refractive index layer, which is the outermost layer of the AR film. The water-repellent film may also be called an antifouling film. The water-repellent film may be formed before or after the design pattern of this embodiment is formed. The water-repellent film is a film that gives water repellency to the surface, and can be formed by applying a solution of a fluorine-based compound such as metaxylene hexafluoride. The water-repellent film may be formed by applying, for example, ion-assisted deposition, in the same manner as in the case of the AR film. In addition, other functional layer may be formed on the AR film, and it does not matter whether such a functional layer contains a metal component or not, as long as the effect of precise processing by laser irradiation can be obtained. Further, such a functional layer may be a uniform film or may be scattered on the surface.

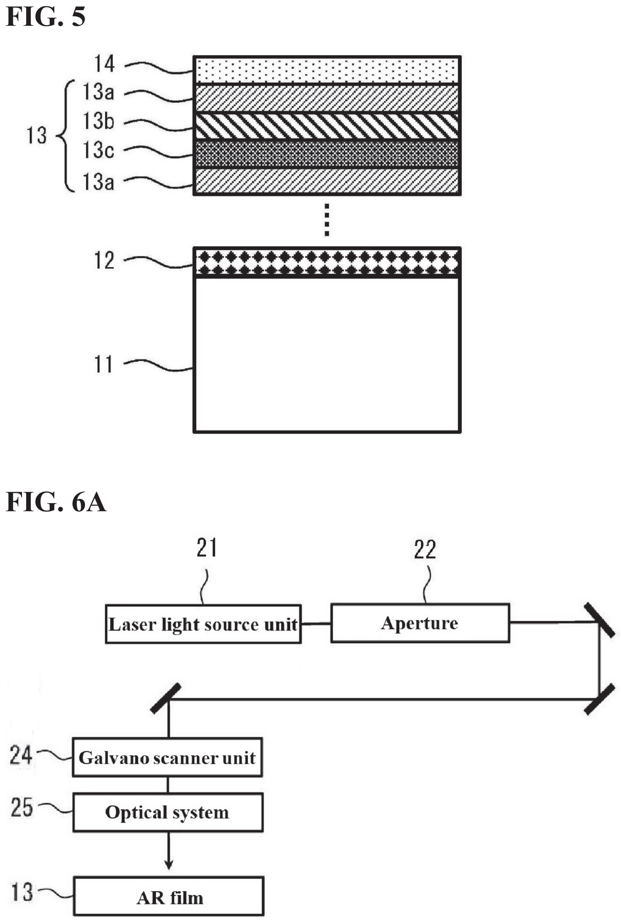

Through the above-described film formation process, a thin film having a laminate structure as shown in Fig. 5 is formed on the optical surface of the lens base material. Fig. 5 is a side cross-sectional view showing an example of the laminate structure of thin films according to this embodiment. The laminate structure shown in the figure is configured by laminating an HC film 12, an AR film 13, and a water-repellent film 14 in this order on the optical surface of a lens base material 11. The AR film 13 has a multilayer structure in which a $SiO_2$ layer that is a low refractive index layer 13a, and a $SnO_2$ layer 13b that is a high refractive index layer and a $ZrO_2$ layer 13c are laminated, with the outermost layer (i.e., the surface layer on the water-repellent film 14 side) set as the $SiO_2$ layer 13a. Here, the $SnO_2$ layer is a high refractive index layer and also a reactive layer.

After the thin film is formed, next, as shown in Fig. 4, a predetermined portion of the spectacle lens on which the thin film is formed is subjected to laser processing and a frame cutting along the contour of the lens shape 5.

When the laser decoration processing is performed after frame cutting (left side of Fig. 4, S104: after cutting), first, jig blocking is performed in which one optical surface of the spectacle lens to be processed (specifically, the optical surface that will not be subjected to the decoration processing described below) is attached to a dedicated jig (S105). Then, the blocked spectacle lens is set in an edging machine, where edging (frame cutting) is performed to the spectacle lens, and the outer shape of the spectacle lens is cut into a frame shape (S106). The jig blocking and frame cutting can be performed using a known technique, and therefore detailed explanation is omitted here. Thereafter, while the blocking is maintained, a lens height in the processing area on the processing surface of the spectacle lens to be processed is measured. Then, laser processing is performed by irradiating the processing area with laser light.

After the design pattern is formed (after laser processing), jig deblocking is performed to remove the spectacle lens from the dedicated jig (S109), and the removed spectacle lens is then cleaned to remove any residues or adhering matter (foreign matter) that are caused by the laser processing (S110). Then, after a final lens appearance inspection (S111), the manufacture of the spectacle lens is completed.

On the other hand, for example, when frame cutting is performed after formation of the design pattern (after laser processing) (right side of Fig. 4, S104: before cutting), first, as in S105, jig blocking is performed to the spectacle lens to be processed (S114). Next, the lens height in the processing area on the processing surface of the spectacle lens to be processed (i.e., the three-dimensional shape of the processing area on the processing surface) is measured (S107 the right side of Fig. 4). The measurement method is the same as that used when performing decoration processing after frame cutting as described above.

After measuring the lens height in the processing area, laser processing is performed by irradiating the processing area with laser light, and raster scanning is performed by moving the irradiation position of the laser light based on pre-prepared pattern data (S108 the right side of Fig. 4). Instead of the raster scanning, vector scanning may be used, whereby laser processing is performed to the processing area on the processing surface of the spectacle lens.

After the design pattern is formed (after laser processing), frame cutting is performed to the laser processed spectacle lens. That is, the blocked spectacle lens is set in the edging machine, and edging (frame cutting) is performed to the spectacle lens, and the outer shape of the spectacle lens is cut into the shape of the frame (S115). After the frame cutting, jig deblocking is performed to remove the spectacle lens from the dedicated jig (S116), and the removed spectacle lens is subjected to lens cleaning to remove any residues or adhering matter (foreign matter) that are caused by processing (S117). Then, after a final lens appearance inspection (S118), the manufacture of the spectacle lens is completed.

<Details of the laser processing>

Next, laser processing, which is a non-heat processing, will be described in more detail.

In this embodiment, the AR film 13 coating the optical surface of the lens substrate 11 is irradiated with laser light, thereby partially removing predetermined layers including the $SiO_2$ layer 13a, which is the outermost layer of the AR film 13, thereby forming a design pattern (laser processing). Specifically, when the laser light that has passed through the outermost $SiO_2$ layer reaches the $SnO_2$ layer below the $SiO_2$ layer, the $SnO_2$ layer is sublimated or evaporated by the energy of the irradiation, and at least a part of it disappears from the irradiated area together with the $SiO_2$ layer on the upper layer side. That is, predetermined layers including the outermost $SiO_2$ layer 13a are partially removed by laser processing of laser light irradiation. At this time, through the removal process of exposing the underlying high refractive index layer, a design pattern is formed on the irradiated area. The exposed high refractive index layer is, for example, the $ZrO_2$ layer 13c.

The $SnO_2$ layer 13b can be formed to have a small thickness (for example, 3 to 20 nm, more preferably 3 to 10 nm). In this embodiment, the $SnO_2$ layer 13b has a thickness of 5 nm.

In the above, $SnO_2$ functions as a reactive layer that is most reactive to laser irradiation. This reactive layer preferably contains Sn and O, and in addition to $SnO_2$, ITO can be used.

Also, in the above, $SnO_2$ is removed by sublimation or evaporation, and underlying $ZrO_2$ as a high refractive index layer is exposed at the irradiated area, but the reactive layer does not necessarily have to be completely removed, and a part may remain at the irradiated area. For example, the reactive layer may be at least partially removed in the thickness direction of the layer by the laser irradiation. As another example of partial removal, laser irradiation may result in a part of the reactive layer remaining at the laser irradiated area not only in the thickness direction of the layer but also when viewed from the direction of laser irradiation (when viewed from the front by a third party). In the example of this paragraph, it is acceptable for the $ZrO_2$ to be only partially exposed. This is because, like $ZrO_2$, $SnO_2$ (or ITO) is also a high refractive index material, and there is no problem with visibility even if $ZrO_2$ is not completely exposed due to $SnO_2$ when viewed from the front by a third party. Therefore, it is sufficient to expose the high refractive index layer below the reactive layer, or the reactive layer that remains partially together with the high refractive index layer.

The phenomenon that occurs during laser irradiation is considered to be as follows. The reactive layer ($SnO_2$, ITO, etc.) is preferably a conductive layer having higher conductivity than the other layers included in the laminate structure.

According to the inventor's investigation, the reactive layer composed of $SnO_2$ has smaller energy corresponding to the band gap where excitation occurs when irradiated with laser under conditions described below, than the $SiO_2$ on the upper layer side (outermost surface side) and the $ZrO_2$ layer on the lower layer side. Therefore, the reactive layer composed of $SnO_2$ is most likely to disappear due to sublimation/evaporation more quickly than the adjacent layers on the upper and lower layer sides.

At this time, a phenomenon called multi-photon absorption (for example, two-photon absorption) is considered to occur, and processing can be performed with extremely high energy efficiency. In this case, it is considered that the fact that $SnO_2$ is a conductive layer works advantageously.

Regarding a concern that after $SnO_2$ disappears, $ZrO_2$ on the lower layer side may be damaged by evaporation or dissolution due to the irradiation energy, substantially only the reactive layer and the layers on the upper layer side can be removed by controlling the irradiation conditions to take advantage of the delay before damage occurs. Then, it has been found that for such precise processing control, it is advantageous to select an ultrashort pulse laser, which will be described later.

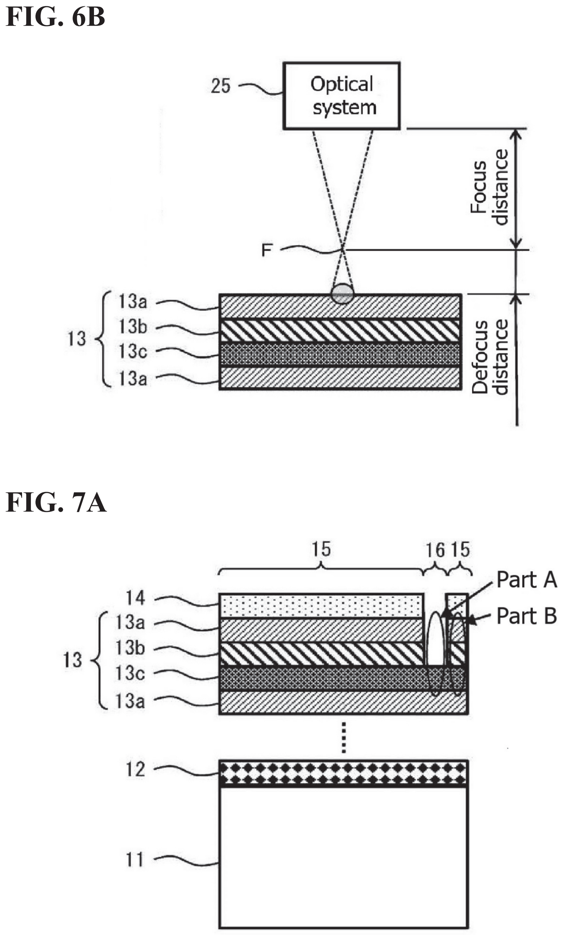

Here, a laser processing device used for laser processing will be briefly described. Fig. 6 is an explanatory view showing a schematic configuration example of a laser processing device used in the spectacle lens manufacturing method according to this embodiment.

As shown in Fig. 6A, the laser processing device used in this embodiment includes a laser light source unit 21, an aperture 22, a galvanometer scanner unit 24, and an optical system 25, and is configured to irradiate the AR film 13 with laser light via these units 21 to 25.

The laser light source unit 21 emits laser light used for laser processing, and is configured to emit an ultrashort pulse laser.

In this embodiment, a lower limit of the pulse width of the ultrashort pulse laser is not particularly limited as long as it exceeds 0 femtoseconds, but a pulse width of 0.01 picoseconds (10 femtoseconds) or more is preferable, and using a pulse width of 0.1 picoseconds or more (including 1 picosecond or more) is advantageous in terms of maintenance and cost of the device and is more suitable for commercial use.

For example, a pulse width of 0.01 picoseconds (10 femtoseconds) or more and less than 100 picoseconds, preferably 0.01 picoseconds or more and less than 50 picoseconds, and more preferably 0.01 picoseconds or more and less than 15 picoseconds, can also be used.

Further, for example, a pulse width of 0.1 picoseconds or more and less than 100 picoseconds, preferably a pulse width of 0.1 picoseconds or more and less than 50 picoseconds, and more preferably a pulse width of 0.1 picoseconds or more and less than 15 picoseconds can be used.

Also, a pulse width of 0.01 picoseconds or more and less than 1 picosecond (or less than 0.1 picoseconds) can be used.

The wavelength of the ultrashort pulse laser of, for example, 355 nm THG (Third Harmonic Generation) or 532 nm SHG (Second Harmonic Generation), as well as a fundamental wavelength of 1064 nm, can be used. An irradiation beam diameter can be selected in accordance with a desired processing design. In order to perform processing of a fine design with high resolution, it is effective to narrow a beam diameter, and in this case, shorter wavelengths are more advantageous. Therefore, among the wavelengths described above, 532 nm is preferable, and 355 nm is even more preferable. Alternatively, 266 nm FHG (Fourth Harmonic Generation) can also be applied.

The pulse energy of the ultrashort pulse laser is, for example, 0.1 $\mu$J or more and 30 $\mu$J or less (maximum approximately 60 $\mu$J) at 50 kHz. More preferably, it is 0.5 to 10 $\mu$J, and even more preferably, it is 1 to 6 $\mu$J.

The beam diameter of the ultrashort pulse laser is, for example, 10 $\mu$m or more and 30 $\mu$m or less. Similarly, the processing diameter per pulse can also be 10 $\mu$m or more and 30 $\mu$m or less. However, in the case of a large processing diameter, the processing time is shortened and production efficiency is improved, so a processing diameter of about 500 $\mu$m may be applied depending on a design pattern shape. Depending on the resolution of a pattern to be obtained, the processing diameter can be smaller, to about 50 $\mu$m, 30 $\mu$m, or 20 $\mu$m.

According to the inventor's investigation, the following was found regarding the laser irradiation condition.

(1) When the pulse width of the ultrashort pulse laser is less than 0.1 picoseconds, good processing can be performed with any wavelength between 266 and 1064 nm. Shorter wavelengths are more advantageous for fine processing. However, they impose a heavy burden on production in terms of equipment maintenance and cost.

(2) When the pulse width of the ultrashort pulse laser is 0.1 picoseconds or more and less than 1 picosecond, good processing can be performed with any wavelength between 266 and 1064 nm. Shorter wavelengths are more advantageous for fine processing.

(3) When the pulse width of the ultrashort pulse laser is 1 picosecond or more and less than 100 picoseconds, good processing can be performed with any wavelength between 266 and 1064 nm. Shorter wavelengths are more advantageous for fine processing. They are suitable for equipment maintenance, cost, and stability of production conditions.

(4) When the pulse width of the ultrashort pulse laser is 100 picoseconds or more and less than 1 nanoseconds, the applied wavelength can cause nonuniformity in processing stability. For example, when a short wavelength of 266 nm is used as the applied wavelength, damage is likely to occur on the lower layer side during the reaction of $SnO_2$, making it difficult to obtain smoothness. Further, even with 355 nm, even a slight change in irradiation conditions can cause the uniformity of processing to be lost, and it is not possible to prevent the phenomenon of causing the removal processing reaching the layer below $SnO_2$.

(5) When the pulse width of the ultrashort pulse laser is 1 nanosecond or more, $SnO_2$ and the layer on the upper layer side cannot be selectively removed. Damage occurs to the underlying layers, and smoothness cannot be obtained.

In the above cases of (4) and (5), it is difficult to obtain smoothness in the processed pattern, which causes diffuse reflection and affects visibility. For example, the spectacle lens causes a risk of interfering with a wearer's vision. Further, when a third party observes the formed design pattern, depending on the lighting conditions, the pattern is likely to be in an imperfect state where it is not recognized as a pattern by an observer.

To prevent the above inconveniences, it is important that the removal processing using an ultrashort pulse laser is uniform in terms of the diameter and depth of the processed material, and to this purpose, it may be useful to apply a predetermined ultrashort pulse width to control and utilize the duration of the irradiation energy and the delay in ablation of the underlying material.

As long as such an ultrashort pulse laser can be emitted, the specific configuration of the laser light source unit 21 or the combination of wavelength and pulse width is not particularly limited.

The laser processing device may further include a beam shaper unit. For example, by using a beam shaper to convert the laser light from the laser light source unit 21 from a Gaussian energy distribution to a top-hat energy distribution, laser processing can be achieved using laser light with a uniform energy distribution. For example, by applying the top-hat energy distribution, stable and uniform processing can be performed when the processing area of a predetermined area is to be formed by partially overlapping a plurality of beam spots. This is because local excess energy addition caused by overlapping spots is suppressed.

Alternatively, the design pattern may be formed by applying energy irradiation with a Gaussian distribution without using the beam shaper. On the other hand, the present inventor has further found that a more significant effect can be obtained by adding the following measures. Specifically, it has been found that the RaA can stably be processed to less than 0.0080 $\mu$m.

Specific examples of the configuration include satisfying at least one of the following:

· A beam divergence angle of the ultrashort pulse laser is less than 0.300 mrad.
· A mode quality M2 of the ultrashort pulse laser is 1.1 or less.
· An aperture is applied to the beam from the ultrashort pulse laser, and the aperture diameter is 80 $\mu$m or less, or 60 $\mu$m or less, or even 30 $\mu$m or less, or 25 $\mu$m or less.

It has been found that by employing the above-described configuration, the thin film for a spectacle lens to be processed, can be irradiated with necessary and sufficient energy while maintaining uniformity over the surface. Further, the present inventor has found that whatever the design pattern, the design pattern is not easily visible to the wearer. Particularly, the present inventor has found that even when the area of a single removed portion of the low refractive index layer is a relatively large area, the wearer can still obtain a comfortable field of vision.

In addition, the spectacle lens is usually constituted with a curved surface. Therefore, by adopting the above configuration, a margin can be provided in the depth of focus compared to when the top-hat type distribution is adopted as it is. This means that, as described above, it is advantageous for stably obtaining smoothness as an area.

The galvanometer scanner unit 24 moves the irradiation position of the laser light from the laser light source unit 21 in two or three dimensions, thereby enabling scanning with the laser light, thereby enabling the formation of a desired design pattern by laser processing. The scannable range of the laser light by the galvanometer scanner unit 24 (i.e., the maximum laser processing area) 4 is set to a size and shape that can completely encompass the outer shape of the spectacle lens to be processed (see Fig. 1).

The optical system 25 can be configured by combining an optical lens such as a telecentric lens and mirror, and guides the laser light from the laser light source unit 21 so that the laser light reaches the part to be processed of the spectacle lens.

In addition, as shown in Fig. 6B, the laser processing device used in this embodiment is configured so that the irradiation of laser light (i.e., ultrashort pulse laser) onto the AR film 13 via an optical system 25 or the like can be performed in a defocus setting. The defocus setting means that a focal position F of the irradiated laser light is set at a predetermined defocus distance from the surface of the AR film 13, which is the part to be processed by the laser light. By irradiation of the laser light with such a defocus setting, the beam energy can be dispersed on the surface of the AR film 13 irradiated with the laser light, thereby making it possible to perform uniform film removal processing. This is particularly useful when the height of the irradiated area may vary due to the influence of the surface shape of the AR film 13. However, this is not necessarily limited to the defocus setting, and for example, irradiation of laser light may be performed in a focus setting in which the focal position F coincides with the surface of the AR film 13, or in an in-focus setting in which the focal position F moves away in an opposite direction from the defocus setting.

Incidentally, the area A, that is a processing portion, may be divided into multiple areas, such as an area A1 where a predetermined layer including the $SiO_2$ layer 13a has been partially removed as described above, and an area A2 where at least the underlying $ZrO_2$ layer has also been removed.

Next, a procedure for laser processing performed using the laser processing device configured as described above will be described.

In the laser processing, first, the spectacle lens, that is a processing object, is set in the laser processing device. At this time, the spectacle lens is set so that the optical surface of the spectacle lens, more specifically the surface of the AR film 13 on the optical surface, becomes the surface to be processed. The optical surface, that is the surface to be processed, may be either the object-side surface or the eyeball-side surface, but here, for example, the eyeball-side surface is taken as the surface to be processed.

After the spectacle lens is set, the laser light source unit 21 and the galvanometer scanner unit 24 are operated based on pre-prepared pattern data (i.e., pattern data of a predetermined resolution created based on the design pattern to be obtained). Thereby, the processing area on the processing surface of the spectacle lens is irradiated with the ultrashort pulse laser so as to form the shape of the processing portion, which is a part of the configuration of the design pattern.

When irradiation of the ultrashort pulse laser is performed, the ultrashort pulse laser passes through the water-repellent film 14 on the surface to be processed of the spectacle lens and reaches the AR film 13 on the surface to be processed. When the ultrashort pulse laser reaches the AR film 13, laser processing is performed thereto by the ultrashort pulse laser.

The ablation processing of this embodiment is a technique that enables highly energy-efficient processing by utilizing the multiphoton absorption phenomenon of the ultrashort pulse laser. More specifically, this is a removal processing in which the influence of heat on the surrounding area of the processed part is minimized, and the area irradiated with the laser light is instantly melted, evaporated, or sublimated, and scattered away. With this type of laser processing, a highly reactive material is instantly removed at the irradiated area, resulting in less thermal impact on the surrounding area of the processed part and enabling processing with reduced thermal damage (such as deformation due to heat).

The laser processing according to this embodiment can be ablation processing as non-heat processing, which can cause a multiphoton absorption process (e.g., a two-photon absorption process) that brings about the multiphoton absorption phenomenon described above. Therefore, even for a material that is relatively transparent (has high transmittance) to laser, the multiphoton absorption allows efficient and satisfactory processing. In this case, an applicable laser wavelength range is wide, and as the wavelength of the laser light, 1064 nm can be advantageously used in addition to 355 nm (THG) and 532 nm (SHG).

As described above, picosecond laser and femtosecond laser with a short pulse width are advantageous for inducing the multiphoton absorption. As a specific numerical value, for example, the pulse width can be less than 100 picoseconds, preferably less than 50 picoseconds, and more preferably less than 1 picosecond (that is, femtoseconds).

When the laser processing is performed by irradiation of the ultrashort pulse laser, in the AR film 13, the light penetrates through the $SiO_2$ in the multilayer structure that constitutes the AR film 13 and reaches the reactive layer ($SnO_2$ in this embodiment), then, the reactive layer reacts instantaneously and sublimes and evaporates, thereby removing the $SiO_2$ layer 13a, which is the outermost layer. In this way, only a predetermined layer including a differential surface layer of the anti-reflection film is partially removed in the shape of the laser processing portion, which is part of the configuration of the design pattern. At the same time, the corresponding portion of the water-repellent film 14 is also removed. Thereby, the $ZrO_2$ layer 13c located below the $SnO_2$ layer 13b is exposed at the irradiated area.

By performing the above-described laser processing, predetermined layers including the $SiO_2$ layer 13a, which is the outermost layer of the AR film 13, are partially removed (removed portions are formed), exposing the $ZrO_2$ layer 13c, which serves as a high refractive index layer, thereby forming (laser processing) the design pattern on the surface to be processed of the spectacle lens. As described above, the irradiated area where the predetermined laser irradiation is applied, is partially processed within the surface to be processed.

<More specific examples of the spectacle lens>

Next, the configuration of the spectacle lens obtained by the manufacturing method including the above-described procedure, that is, the configuration of the spectacle lens according to this embodiment, will be specifically described.

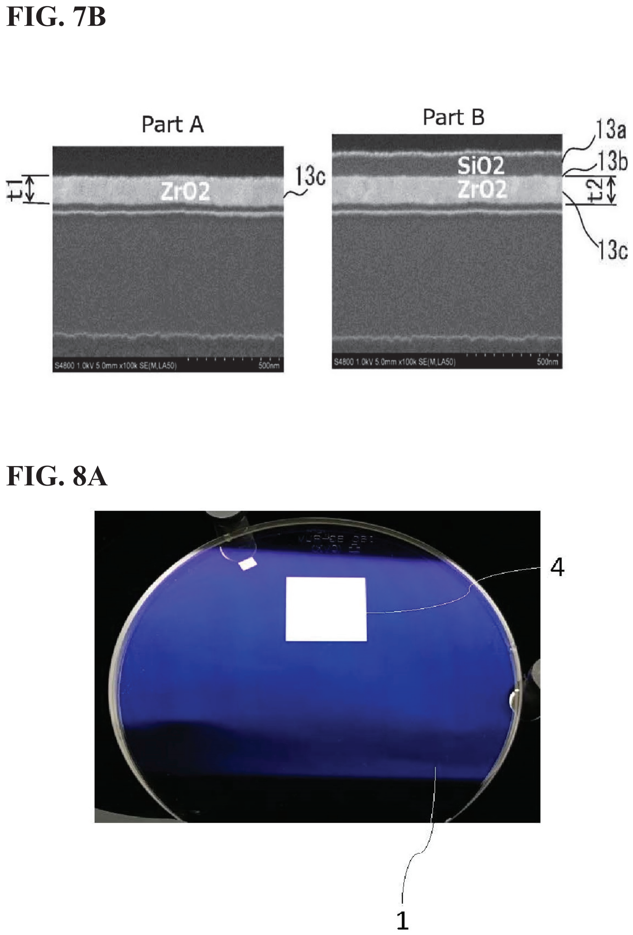

Fig. 7A is an explanatory view showing a configuration example of a main part of the spectacle lens according to this embodiment, and Fig. 7B shows a specific example of the result of observation of a cross section of the AR film 13 using an electron microscope. The illustrated example is an enlarged view of parts A and B in Fig. 7A, showing electron microscope images of the laser scan area 16 (i.e., area A) and an unprocessed area 15 (i.e., area B).

As shown in Fig. 7A, the spectacle lens according to this embodiment is configured by laminating an HC film 12, an AR film 13, and a water-repellent film 14 in this order on the optical surface of the lens base material 11. The AR film 13 has a multilayer structure in which a $SiO_2$ layer 13a, which is a low refractive index layer, and a $SnO_2$ layer 13b and a $ZrO_2$ layer 13c, which are high refractive index layers, are laminated, and the multilayer structure is configured such that certain layers including the $SiO_2$ layer 13a, which is the outermost layer (specifically, the $SnO_2$ layer, which is the reactive layer, and the layers on the surface side thereof) are partially removed to expose the $ZrO_2$ layer 13c, which is the high refractive index layer. That is, the spectacle lens of this embodiment is configured to include an unprocessed area 15 in which the optical surface of the lens base material 11 is coated with an HC film 12, an AR film 13, and a water-repellent film 14, and a laser scan area (patterned area) 16 in which the outermost $SiO_2$ layer 13a of the AR film 13, the $SnO_2$ layer 13b directly below it, and the water-repellent film 14 have been partially removed, exposing a $ZrO_2$ layer 13cb that is a high refractive index layer.

The unprocessed area 15 and the laser scan area 16 are covered with the $SiO_2$ layer 13a on one side, and the $ZrO_2$ layer 13c (or the reactive layer that is a high refractive index layer, if a part of the reactive layer remains) on the other side is exposed, and therefore the light reflectance differs depending on whether or not the $SiO_2$ layer 13a is present, so when the spectacle lens is viewed with illumination light irradiated thereon, the pattern shape formed by the laser scan area 16 can be visually recognized. That is, when the laser scan area 16 is formed in the shape of the processing portion, which is a part of the configuration of the design pattern, the area A, that is the processing portion, can be visually recognized. In this way, the removed portion of the predetermined layer of the AR film 13 can be used to form a design pattern.

The laser scan area 16 constituting the design pattern is formed by removing the $SiO_2$ layer 13a, which is the outermost layer of the AR film 13, and at least a part of the $SnO_2$ layer 13b, which is the layer immediately below the $SiO_2$ layer 13a. That is, the layers to be removed are stopped at a predetermined layer containing $SnO_2$, which is a reactive layer. Therefore, peeling of each layer of the multilayer structure that constitutes the AR film 13, due to the formation of the laser scan area 16 can be suppressed.

As described above, the $SiO_2$ layer 13a, which is the outermost layer of the AR film 13, can be removed by laser processing using irradiation of the ultrashort pulse laser. Such laser processing reduces the thermal effect on the surrounding area of the processed part, thereby preventing thermal damage. Further, by applying the above-described predetermined pulse width, stable processing can be performed while suppressing damage to layers below the reactive layer. As a result, the $ZrO_2$ layer 13c serving as a high refractive index layer is exposed, but damage to the exposed surface of the $ZrO_2$ layer 13c can be suppressed.

When damage to the exposed surface of the $ZrO_2$ layer 13c can be suppressed, the reduction in the film thickness of the $ZrO_2$ layer 13c due to the removal processing can also be suppressed. The film thicknesses of the $SiO_2$ layer 13a, the $ZrO_2$ layer 13c, etc., can be determined by obtaining an electron microscope image of the cross section of the AR film 13 and analyzing the obtained image.

Fig. 7B shows a specific example of the cross section of the AR film 13 observed with an electron microscope. The illustrated example is an enlarged view of parts A and B in FIG. 7A, showing electron microscope images of the laser scan area 16 and the unprocessed area 15. In the unprocessed area 15, the $SiO_2$ layer 13a, the $SnO_2$ layer 13b, and the $ZrO_2$ layer 13c are laminated, but the $SnO_2$ layer 13b is thin (for example, about 5 nm) and therefore is difficult to be recognized in the image. On the other hand, in the laser scan area 16, the $SnO_2$ layer 13b and the $SiO_2$ on the surface side of the $SnO_2$ layer 13b are removed, thereby exposing the $ZrO_2$ layer 13c.

According to the electron microscope image shown in the illustrated example, it can be seen that in the $ZrO_2$ layer 13c that is exposed by removing $SnO_2$ and the layers on the surface of the $SnO_2$, there is no sig-

nificant difference between the thickness t1 of the laser scan area 16 and the thickness t2 of the unprocessed area 15. More specifically, the ratio t1/t2 of the thickness t1 of the removed portion to the thickness t2 of the non-removed portion is, for example, in a range of 0.90 or more and 1.00 or less, preferably in a range of 0.95 or more and 1.00 or less, and more preferably in a range of 0.99 or more and 1.00 or less.

In this way, the $ZrO_2$ layer 13c that is a high refractive index layer does not experience a reduction in film thickness due to the removal processing, or even when the reduction does occur, the amount of reduction is kept extremely small. This is because the laser scan area 16 is formed by laser processing using irradiation of the ultrashort pulse laser, and the underlying $ZrO_2$ layer 13c is not damaged. This means that when the thickness ratio t1/t2 of the exposed $ZrO_2$ layer 13c is within the above-described range, the laser scan area 16 is formed without damaging the $ZrO_2$ layer 13c, thus supporting the fact that the laser scan area 16 was formed using laser processing by the ultrashort pulse laser.

The reason why the $ZnO_2$ layer 13 is not damaged is that the reactivity of the reactive layer (here, the $SnO_2$ layer) by the ultrashort pulse laser is higher than that of $ZnO_2$. As will be described later, this difference in reactivity can be significantly obtained by applying the ultrashort pulse laser with a predetermined pulse width.

By the $ZrO_2$ layer having a thickness of 10 times or more, preferably 15 times or more larger than the thickness of the $SnO_2$ layer, there is no risk of film peeling or impact on the visibility of the design pattern even when slightly reducing the thickness of the $ZrO_2$ layer after the $SnO_2$ layer disappears.

Further, the melting point of $SnO_2$ is about 1127°C, which is lower than that of $SiO_2$ on the upper layer side and that of $ZrO_2$ on the lower layer side, and this is also considered to contribute to the ease of ablation control.

Although embodiments of the present invention have been described above, the above disclosure presents exemplary embodiments of the present invention. That is, the technical scope of the present invention is not limited to the exemplary embodiments described above, and various modifications are possible without departing from the spirit of the present invention.

The above-described embodiment shows a case in which the outermost layer of the AR film 13 is the $SiO_2$ layer 13a as a low refractive index layer, and the underlying layer of the $SiO_2$ layer 13a is the $SnO_2$ layer 13b as a high refractive index layer, and further underlying layer is the $ZrO_2$ layer 13c as a high refractive index layer, and when the $SnO_2$ reacts with the laser irradiation and is partially removed, the $SiO_2$ is also removed, thereby exposing the $ZrO_2$ layer 13c as a high refractive index layer. However, the present invention is not limited thereto. The AR film 13 may be configured by laminating layers other than the $SiO_2$ layer 13a, the $SnO_2$ layer 13b, and the $ZrO_2$ layer 13c. Further, the outermost layer of the AR film 13 may be a layer other than the $SiO_2$ layer 13a, as long as it is a low refractive index layer. The high refractive index layer may be other than the $SnO_2$ layer 13b or the $ZrO_2$ layer 13c. For example, the $SnO_2$ layer 13b as the reactive layer may be replaced with a thin conductive ITO layer.

It is preferable that each multilayer film on each surface of the spectacle lens includes one or more high refractive index layers and one or more low refractive index layers, and that the total number of layers is 10 or less (preferably 9 or less, and more preferably 8 or less).

The above-described embodiment shows an example in which the $SnO_2$ layer, which is a reactive layer contained in the AR film 13, and the $SiO_2$ layer 13a, which is the outermost layer immediately above the $SnO_2$ layer, are removed by laser processing using the ultrashort pulse laser. This brings about the effect of suppressing film peeling. In this way, laser processing using the ultrashort pulse laser can be performed so as to remove a predetermined number of layers including the outermost layer. Even when removing multiple layers including the outermost layer, laser processing using the ultrashort pulse laser can suppress damage to the exposed surface of the layer that will be exposed by the removal, and therefore suppress the reduction in film thickness during the removal processing. That is, even when removing multiple layers including the outermost layer, for the layer immediately below the removed layer, the ratio t1/t2 of the thickness t1 of the removed portion to the thickness t2 of the non-removed portion is, for example, in a range of 0.90 or more and 1.00 or less, preferably 0.95 or more and 1.00 or less, and more preferably 0.99 or more and 1.00 or less.

The spectacle lens before laser processing in this embodiment may be provided with an anti-reflection film on both sides. The anti-reflection film in this embodiment shown in Fig. 7 can be an interference layer having a 6 to 9 layers configuration, and can have, for example, the following configuration. From the base material side, the configuration can be $SiO_2$ (film thickness 20 to 40 nm) / $ZrO_2$ (film thickness 3 to 10 nm) / $SiO_2$ (film thickness 350 to 450 nm) / $ZrO_2$ (film thickness 10 to 35 nm) / $SiO_2$ (film thickness 10 to 50 nm) / $ZrO_2$ (film thickness 30 to 55 nm) / $SnO_2$ (film thickness 3 to 20 nm) / $SiO_2$ (film thickness 80 to 150 nm). Alternatively, a specific example of the spectacle lens is described in International Publication No. WO2020/067407. The description of this publication is incorporated herein by reference in its entirety. Particularly, the spectacle lens having the configurations of Examples 1 and 2 (when only one of them is to be selected, Example 1) described in this publication may be adopted as a specific example. A specific example of the spectacle lens before decoration in this embodiment is as follows.

A specific example of the spectacle lens is: a spectacle lens having multilayer films on both sides of a lens base material, and in at least the area B (unprocessing portion); the sum of the average reflectance in the 360 to 400 nm wavelength band on each surface of the spectacle lens is 6.0% or less; the sum of the average reflectance in the 400 to 440 nm wavelength band on each surface of the spectacle lens is 20.0% or more; and the sum of the average reflectance in the 480 to 680 nm wavelength band on each surface of the spectacle lens is 2.0% or less.

That is, regarding the light of the purple region (400 to 440 nm) in the light of the blue region, that should be blocked, the sum of the average reflectance on each surface is 20.0% or more (preferably more than 20.0%, more preferably 25.0% or more). That is, the reflectance is locally increased in the purple region.

Instead, regarding the light of the ultraviolet region or the light of the low wavelength side (360 to 400 nm) of the violet region, the sum of the average reflectance on each surface is 6.0% or less (preferably less than 6.0%, more preferably 5.0% or less), and contrary to the case of the violet region (400 to 440 nm), the reflectance is locally reduced.

Further, regarding the light of the high wavelength side of the red region (480 to 680 nm) within the blue wavelength region, the sum of the average reflectance on each surface is 2.0% or less (preferably less than 2.0%, more preferably 1.5% or less), and the reflectance is particularly locally reduced for the visible light of a main wavelength band in order to aim for the transmission of the visible light.

In this specific example, the transmission of the visible light can be ensured while ensuring the effect of blocking the light of the blue region.

When the laser processing of this embodiment is performed to this spectacle lens of a specific example, the following advantageous effects are achieved. In at least the area B (unprocessing portion) of the spectacle lens of this specific example, the effect of blocking the light of the blue region is ensured, that is, the reflectance of the light of the blue region is high. Therefore, when a third party views the object-side surface of the spectacle lens 1, the area B (unprocessing portion) of the spectacle lens appears blue. On the other hand, the laser processed area (the area A that is the laser processing portion) appears in the color of the layer exposed by the laser processing (yellow, gold, or silver, which is the color of the $ZrO_2$ layer in this specific example). As a result, to a third party, the area A, which is the processing portion, of the spectacle lens 1 fitted in the frame appears to stand out against a blue background. In this case, a design pattern with a high design effect can be obtained. This also applies when the reflectance of the light of the blue region is not high but when the reflectance of the light of the other color region is high. An example of the background color includes green or pearlescent color that appears when a third party views the area B (unprocessing portion) from the object-side surface of the spectacle lens 1.

The above-described aspect of good contrast when viewing the processing portion can be achieved whether it is the laser processing for each multilayer film on the object side of the spectacle lens or laser processing for each multilayer film on the eyeball side.

Regardless of which surface of each multilayer film is laser processed, there is substantially no interference (obstruction) with the field of vision caused by the processing portion entering the field of vision of the wearer. That is, the spectacle lens having the design pattern of this embodiment does not obstruct the wearer's clear vision.

Therefore, as described above, the area A, which is the processing portion in this embodiment, has high transmittance to visible light, and the difference in transmittance with area B, which has not been processed, is small, so the presence of the processing portion is virtually unrecognizable even when it comes into the wearer's field of vision.

For example, when this embodiment is applied to rimless or half-rim spectacles, the following advantage is obtained. That is, while applying rimless or half-rim designs, a pseudo-rim can be created by drawing a pseudo-rim near the outer edge of the lens using a coloring material such as a known pigment, or by forming irregularities on the lens surface. However, according to the design pattern of this embodiment (i.e., the area A that is the processing portion and the area B that is the unprocessing portion) formed by the above-described laser irradiation, there is an advantage that it allows the wearer to feel free from the limitations experienced with rimmed spectacles, such as an impression that the field of vision is limited to a certain area and the feeling that the outer edge of the field of vision is dark due to the rim, and allows the wearer to feel a wide and bright field of vision.

Further, when another person observes the wearer's lens (i.e., when observing the wearer's lens from its object side), and when the wearer's lens is at a predetermined relative position (or angle) relative to indoor lighting or sunlight, the design pattern is clearly visible, but when they are not at the above relative position, the design pattern is difficult to view. Therefore, a predetermined design pattern can be clearly viewed or almost completely disappeared, and this change in visibility can add value to the lens in terms of design.

On the other hand, when the lens is not at the above-described predetermined relative positional relationship, they are recognized by another person as a normal clear lens (or predetermined color lens, photochromic lens, or polarized lens). Therefore, unlike the rimmed spectacles, there is no phenomenon of the rim obscuring or casting a shadow on a wearer's face, as occurs with rimmed spectacles, providing bright visibility.

The design pattern of this embodiment (particularly the area A, which is the processing portion) can be formed within a frame-cut lens area, and can carry a desired letter, symbol, or pattern on the lens or apply a desired design to the lens without affecting the function of the spectacles.

The laser processing of this embodiment is the processing visible from both a processed surface side and a back surface side of the lens. This is because in a multilayer anti-reflection film, designed anti-reflection properties are reduced in the removed portion where a part has been removed (in this embodiment, $SnO_2$ and the $SiO_2$ layer on the upper layer side have been removed), resulting in a contrast in the amount of reflected light between the removed portion and the non-removed portion.

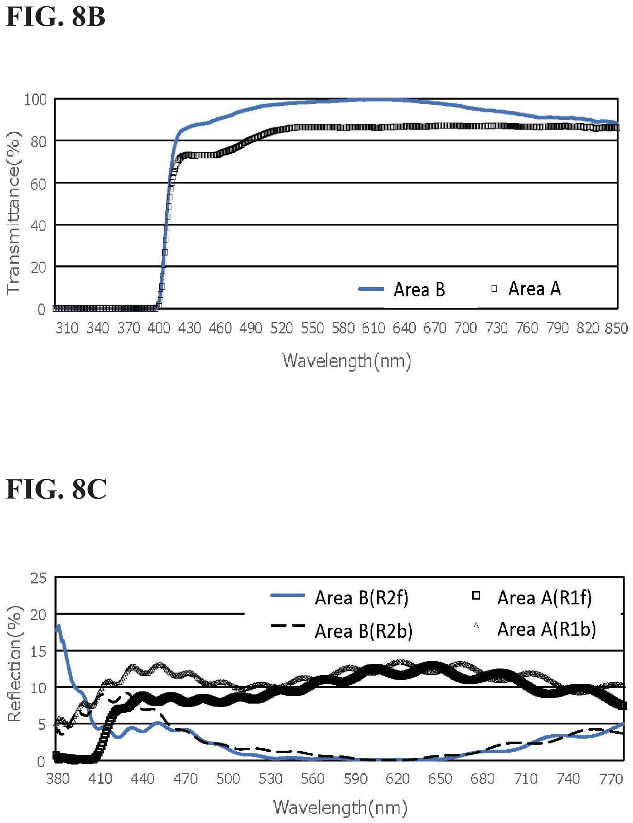

Fig. 8 shows a spectacle lens according to a specific example, showing the surface of the area to be processed when processing is performed using a pulse laser to a sample having an anti-reflection film on both the object side and the eyeball side. Fig. 8A is a photograph taken from the object-side surface of the spectacle lens according to a specific example having the anti-reflection film shown in FIG. 7A provided on both sides thereof, showing processing of the eyeball-side surface using the pulse laser light having a wavelength of 355 nm and a pulse width of 10 picoseconds or more and less than 20 picoseconds. In FIG. 8A, a bright colored area is an area corresponding to the laser scan area 16, and a dark colored area shows an unprocessing portion. Fig. 8B is a plot showing the transmittance (T'1) in the area A and the transmittance (T'2) when passing through the area B, with the vertical axis representing transmittance (%) and the horizontal axis representing wavelength (nm). FIG. 8C is a plot showing the reflectance (R1f, R2f, R1b, R2b) of the spectacle lens of the above specific example, with the vertical axis representing reflectance (%) and the horizontal axis representing wavelength (nm).

In FIG. 8A, irradiation of the laser is performed so as to move horizontally by raster scanning, and ultimately an entire surface is processed.

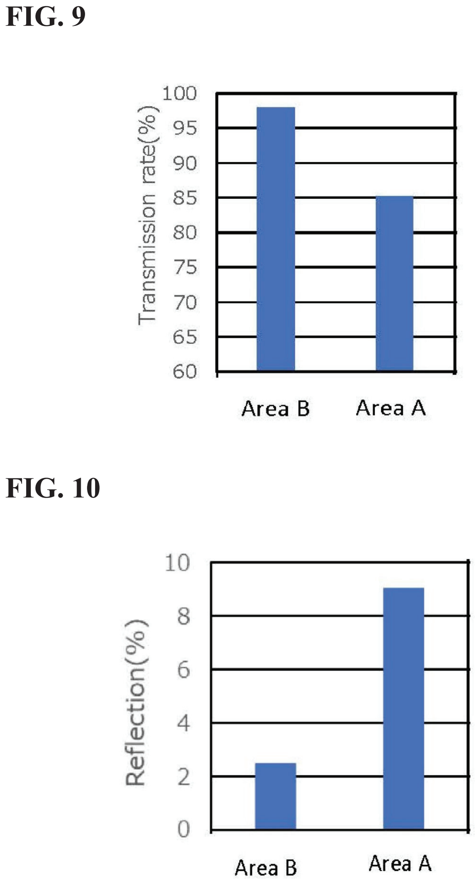

Fig. 9 shows a spectacle lens according to a specific example, and is a bar graph (vertical axis represents transmittance (%)) showing a visible transmittance when laser processing is performed from the eyeball-side to a sample having an anti-reflection film provided on both the object side and the eyeball side.

As shown in Fig. 9, in the spectacle lens of the specific example, the transmittance can be maintained at 80% or more regardless of whether the unprocessing portion or the processing portion is present.

Fig. 10 shows a spectacle lens according to a specific example, and is a bar graph (vertical axis represents reflectance (%)) showing a reflectance when laser processing is performed from the eyeball side to the sample having an anti-reflection film provided on each of the object-side and eyeball-side surfaces by irradiation of the light from the normal direction of the object-side surface toward the object-side surface so as to be reflected in the normal direction.

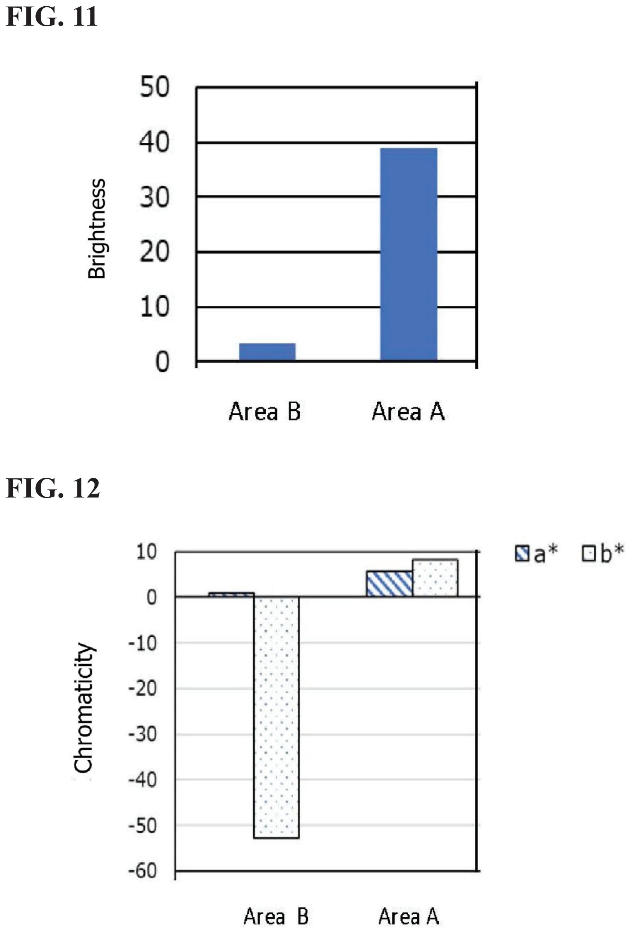

FIG. 11 shows the spectacle lens according to a specific example, and is a bar graph (vertical axis represents brightness) showing the brightness L* when laser processing is performed to the sample having an anti-reflection film provided on both the object side by irradiating the eyeball-side surface with light from the normal direction on the object-side surface toward the object-side surface.

FIG. 12 shows a spectacle lens according to a specific example, and is a bar graph (vertical axis represents chromaticity) showing the chromaticities a* and b* when laser processing is performed from the eyeball side to the sample having an anti-reflection film on each of the object-side and eyeball-side surfaces by irradiation of light from the normal direction of the object-side surface toward the object-side surface.

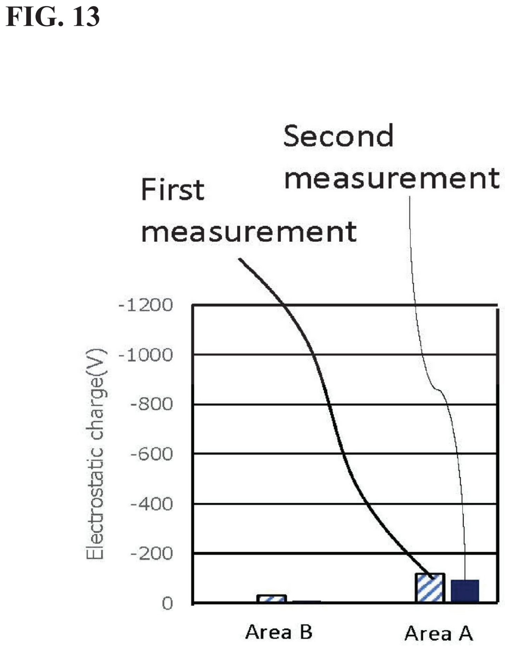

Fig. 13 shows a spectacle lens according to a specific example, and is a bar graph (vertical axis represents a charge amount) showing an amount of charge (unit: V) on the eyeball-side surface (laser-processing side) of a sample having an anti-reflection film on each of the object-side and eyeball-side surfaces. The black bar graph shows a second measurement. The charge amount was measured using an apparatus named SK-H050. By at least partially removing the $SnO_2$ layer 13b, a decorative effect can be obtained while maintaining the conductivity desired for a lens.

Explanation of Reference Numerals

1... Spectacle lens (before edging), 1A... Spectacle lens (after edging) (edged lens), 2... Edged shape, 3... Processing portion, 4... Scannable range, 11... Lens base material (optical base material), 12... HC film, 13... AR film, 13a... $SiO_2$ layer (low refractive index layer), 13b... $SnO_2$ layer (high refractive index layer), 13c... $ZrO_2$ layer (high refractive index layer), 14... Water-repellent film, 15... Unprocessed area, 16... Laser scan area (processing portion), 21... Laser light source unit, 22... Aperture, 24... Galvano scanner unit, 25... Optical system

**Claims**

1. A spectacle lens comprising:

   an object-side surface and an eyeball-side surface,
   wherein in two areas A and B in an area within a spectacle frame in a plan view on one surface of the spectacle lens, the spectacle lens has a film so that in one area A, at least a part of the film is absent, and in the other area B, the part of the film is present,
   the spectacle lens further comprising:

   a design pattern that is constituted due to a difference in appearance between the area A and the area B when a third party views the spectacle lens in a worn state from the object-side surface,
   wherein a visible transmittance in the area A and a visible transmittance in the area B are both 80% or more, and an arithmetic mean roughness RaA of the area A is 0.2 $\mu$m or less.

2. The spectacle lens according to claim 1, comprising:

   a lens base material having an optical surface; and
   an anti-reflection film that is a film coating the optical surface of the lens base material,
   the anti-reflection film having a multilayer structure including a laminate of a low refractive index layer and a high refractive index layer, and
   the anti-reflection film including a reactive layer that is relatively more reactive to irradiation with an ultrashort pulse laser than other layers included in the anti-reflection film,
   wherein in the area A, which is a removal portion resulting from at least partial removal of a predetermined layer including an outermost layer of the multilayer structure, the high refractive index layer below the reactive layer or the partially remaining reactive layer is exposed.

3. The spectacle lens according to claim 1 or 2, wherein the difference between the appearance of the area A and the appearance of the area B includes a difference in specular gloss due to reflected light, and the specular gloss of the area A is equal to or greater than the specular gloss of the area B.

4. The spectacle lens according to claim 1 or 2, wherein the difference between the appearance of the area A and the appearance of the area B includes a difference in color due to reflected light.

5. The spectacle lens according to claim 4, wherein when a third party views the spectacle lens in a worn state from the object side, and when the area A appears colored due to reflected light a, the area B also appears colored due to reflected light b.

6. The spectacle lens according to claim 1 or 2, comprising:

   a lens base material having an optical surface; and
   an anti-reflection film that is a film coating the optical surface of the lens base material,
   wherein the anti-reflection film has a high anti-reflection ability against some wavelengths of visible light;
   a color of reflected light from the area B is a color of a wavelength of the visible light at which the anti-reflection ability is low; and
   a color of reflected light from the area A is a color of a wavelength of the visible light at which the anti-reflection ability is low when an outermost surface of the anti-reflection film is partially absent.

7. The spectacle lens according to claim 1 or 2, wherein a ratio (RaA/RaB) of an arithmetic mean roughness RaA of the area A to an arithmetic mean roughness RaB of the area B is 3 or less.

8. The spectacle lens according to claim 1 or 2, wherein both area A and area B are outermost surface areas.

9. The spectacle lens according to claim 1 or 2, wherein RaA is less than 0.0080 $\mu$m.

10. The spectacle lens according to claim 1 or 2, wherein the area A is present within an area having a radius of 30 mm from a lens center.

11. The spectacle lens according to claim 1 or 2, wherein the area A is present on a nose side and on a lower side when viewed from a lens center.

12. The spectacle lens according to claim 1 or 2, wherein the area A occupies 5% to 99% of an entire spectacle lens in a plan view.

13. The spectacle lens according to claim 1 or 2, wherein a maximum total length of a portion constituting the area A is 8 mm or more in a plan view.

14. The spectacle lens according to claim 1 or 2, wherein an average visible light reflectance in the area A is 7% or more.

15. The spectacle lens according to claim 1 or 2, wherein a brightness in the area A is higher than that in the area B.

16. The spectacle lens according to claim 2,

wherein the anti-reflection film is a film having a high anti-reflection ability in a predetermined wavelength range of visible light;
a color of reflected light from the area B is a color of a wavelength of the visible light at which the anti-reflection ability is relatively low;
a color of the reflected light from the area A is a color of a wavelength of the visible light at which the anti-reflection ability is low when an outermost surface of the anti-reflection film is partially absent;
a difference between an appearance of the area A and an appearance of the area B from which a predetermined layer including the outermost layer of the multilayer structure has not been removed includes a difference in specular gloss due to reflected light and a difference in color;

the specular gloss of the area A is equal to or greater than the specular gloss of the area B;
RaA is less than 0.0080 $\mu$m;
a ratio of an arithmetic mean roughness RaA of the area A to an arithmetic mean roughness RaB of the area B (RaA/RaB) is 3 or less;
the area A occupies 5% or more and 99% or less of an entire spectacle lens in a plan view; and
a maximum total length of a portion constituting the area A is 8 mm or more in a plan view.

17. Spectacles comprising:

a spectacle frame; and
spectacle lenses after edging each having an object-side surface and an eyeball-side surface, wherein in two areas A and B in a plan view on one surface of the spectacle lens after edging, the spectacle lens after edging has a film so that in one area A, at least a part of the film is absent, and in the other area B, the part of the film is present,
the spectacles further comprising:

a design pattern that is constituted due to a difference in appearance between the area A and the area B when a third party views the spectacle lens in a worn state from an object side,
wherein a visible transmittance in the area A and a visible transmittance in the area B are both 80% or more, and an arithmetic mean roughness RaA of the area A is 0.2 $\mu$m or less.

18. The spectacles according to claim 17, comprising:

a lens base material having an optical surface; and
an anti-reflection film that is a film coating the optical surface of the lens base material,
the anti-reflection film having a multilayer structure including a laminate of a low refractive index layer and a high refractive index layer, and
the anti-reflection film including a reactive layer that is relatively more reactive to irradiation with an ultrashort pulse laser than other layers included in the anti-reflection film,
wherein in the area A, which is a removal portion resulting from at least partial removal of a predetermined layer including an outermost layer of the multilayer structure, the high refractive index layer below the reactive layer or the partially remaining reactive layer is exposed.

19. The spectacles according to claim 17 or 18, wherein a difference between an appearance of the area A and an appearance of the area B includes a difference in a specular gloss due to reflected light, and a specular gloss of the area A is equal to or greater than the specular gloss of the area B.

20. The spectacles according to claim 17 or 18, wherein a difference between an appearance of the area A and an appearance of the area B includes a difference in color due to reflected light.

21. The spectacles according to claim 20, wherein when a third party views the spectacle lens in a worn state from an object side, and when the area A appears colored due to reflected light a, the area B also appears colored due to reflected light b.

22. The spectacles according to claim 17 or 18, comprising:

a lens base material having an optical surface; and
an anti-reflection film that is the film coating the optical surface of the lens substrate;
the anti-reflection film having a high anti-reflection ability against some wavelengths of visible light,
wherein a color of reflected light from the area B is a color of a wavelength of the visible light at which the anti-reflection ability is low, and
a color of reflected light from the area A is a color of a wavelength of the visible light at which the anti-reflection ability is low when an outermost surface of the anti-reflection film is partially absent.

23. The spectacles according to claim 17 or 18, wherein a ratio of an arithmetic mean roughness RaA of the area A to an arithmetic mean roughness RaB of the area B (RaA/RaB) is 3 or less.

24. The spectacles according to claim 17 or 18, wherein the area A and the area B are both areas on the outermost surface of an object-side surface or an eyeball-side surface of the spectacle lens after edging.

25. The spectacles according to claim 17 or 18, wherein RaA is less than 0.0080 $\mu$m.

26. The spectacles according to claim 17 or 18, wherein the spectacle lens after edging has the area A present on a nose side and on a lower side when viewed from a lens center.

27. The spectacles according to claim 17 or 18, wherein the area A occupies 5% to 99% of an entire spectacle lens after edging.

28. The spectacles according to claim 17 or 18, wherein a maximum total length of a portion constituting the area A is 8 mm or more in a plan view.

29. The spectacles according to claim 18,

wherein the anti-reflection film has a high anti-reflection ability against some wavelengths of visible light;
a color of reflected light from the area B is a color of a wavelength of the visible light at which the anti-reflection ability is high;
a color of reflected light from the area A is a color of a wavelength of the visible light at which the anti-reflection ability is low when an outermost surface of the anti-reflection film is partially absent;
a difference between an appearance of the area A and an appearance of the area B includes a difference in a specular gloss due to reflected light;
a specular gloss of the area A is equal to or greater than the specular gloss of the area B;
RaA is less than 0.0080 $\mu$m;
a ratio of an arithmetic mean roughness RaA of the area A to an arithmetic mean roughness RaB of the area B (RaA/RaB) is 3 or less;
the spectacle lens after edging has the area A present on a nose side and on a lower side when viewed from a lens center;
the area A occupies 10% or more and 99% or less of an entire spectacle lens after edging in a plan view; and
a maximum total length of a portion constituting the area A is 8 mm or more in a plan view.

## FIG. 1

## FIG. 2A

**FIG. 2B**

**FIG. 3**

# FIG. 4

S101 — Lens base material polishing and dyeing

↓

S102 — HC film deposition

↓

S103 — AR film deposition

↓

S104 — Decoration processing after frame cutting?

**Before cutting** →

**After cutting** ↓

| | |
|---|---|
| S105 — Jig blocking | S114 — Jig blocking |
| S106 — Frame shape cutting | S107 — Lens height measurement in processing area |
| S107 — Lens height measurement in processing area | S108 — Laser processing (Raster scan) |
| S108 — Laser processing (Raster scan) | S115 — Frame shape cutting |
| S109 — Jig deblocking | S116 — Jig deblocking |
| S110 — Lens cleaning | S117 — Lens cleaning |
| S111 — Lens visual inspection | S118 — Lens visual inspection |

## FIG. 5

## FIG. 6A

# FIG. 6B

# FIG. 7A

## FIG. 7B

## FIG. 8A

## FIG. 8B

## FIG. 8C

**FIG. 9**

**FIG. 10**

**FIG. 11**

**FIG. 12**

**FIG. 13**

## INTERNATIONAL SEARCH REPORT

| | International application No. |
|---|---|
| | **PCT/JP2024/017389** |

**A. CLASSIFICATION OF SUBJECT MATTER**

*G02C 7/02*(2006.01)i; *G02B 1/115*(2015.01)i
FI: G02C7/02; G02B1/115

According to International Patent Classification (IPC) or to both national classification and IPC

**B. FIELDS SEARCHED**

Minimum documentation searched (classification system followed by classification symbols)

G02C7/02; G02B1/115

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2012-194546 A (HOYA CORPORATION) 11 October 2012 (2012-10-11) paragraphs [0026], [0044], [0048]-[0052], [0064], fig. 5 | 1, 3-9, 14-15, 17, 19-25 |
| Y | | 10-13, 16, 26-29 |
| A | | 2, 18 |
| Y | JP 2022-7102 A (HOYA LENS THAILAND LTD.) 13 January 2022 (2022-01-13) paragraphs [0022], [0056]-[0065], fig. 1-2, 5 | 1-29 |
| A | JP 2008-547053 A (ESSILOR INTERNATIONAL (COMPAGNIE GENERALE D'OPTIQUE)) 25 December 2008 (2008-12-25) paragraph [0021] | 1, 3-17, 19-29 |
| A | JP 2021-120738 A (AGC INC.) 19 August 2021 (2021-08-19) paragraphs [0035]-[0036], [0040] | 1, 3-17, 19-29 |
| Y | JP 2021-513676 A (SIGHTGLASS VISION, INC.) 27 May 2021 (2021-05-27) paragraphs [0144]-[0146] | 1-29 |

☑ Further documents are listed in the continuation of Box C. ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **04 June 2024** | **25 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/017389**

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2002-131503 A (SEIKO EPSON CORPORATION) 09 May 2002 (2002-05-09) paragraph [0023] | 1-29 |
| Y | US 2018/0169791 A1 (SPY EYE, LLC) 21 June 2018 (2018-06-21) paragraphs [0026]-[0027], [0031]-[0035] | 1-29 |
| Y | US 4715702 A (DILLON, Stephen M.) 29 December 1987 (1987-12-29) fig. 1, 3 | 10-13, 16, 26-29 |
| Y | JP 2023-504906 A (MICHAELS, Bradan T.) 07 February 2023 (2023-02-07) fig. 3-5 | 10-13, 16, 26-29 |
| A | KR 10-1927023 B1 (LEE, Eun-Yeong) 07 December 2018 (2018-12-07) entire text, all drawings | 1-29 |

Form PCT/ISA/210 (second sheet) (July 2022)

## INTERNATIONAL SEARCH REPORT
### Information on patent family members

International application No.

**PCT/JP2024/017389**

| Patent document cited in search report | | | Publication date (day/month/year) | Patent family member(s) | | | Publication date (day/month/year) |
|---|---|---|---|---|---|---|---|
| JP | 2012-194546 | A | 11 October 2012 | US | 2014/0055743 | A1 | |
| | | | | paragraphs [0039], [0064], [0068]-[0072], [0089], fig. 5 | | | |
| | | | | WO | 2012/118086 | A1 | |
| | | | | EP | 2682808 | A1 | |
| | | | | CN | 103502878 | A | |
| | | | | KR | 10-2013-0124396 | A | |
| JP | 2022-7102 | A | 13 January 2022 | US | 2021/0405264 | A1 | |
| | | | | paragraphs [0041]-[0042], [0091]-[0101], fig. 1-2, 5 | | | |
| | | | | EP | 3929632 | A1 | |
| | | | | KR | 10-2022-0000345 | A | |
| | | | | CN | 113848655 | A | |
| | | | | TW | 202201046 | A | |
| JP | 2008-547053 | A | 25 December 2008 | US | 2010/0136290 | A1 | |
| | | | | paragraphs [0045]-[0046] | | | |
| | | | | WO | 2006/136757 | A2 | |
| | | | | FR | 2887488 | A1 | |
| | | | | CN | 101243335 | A | |
| JP | 2021-120738 | A | 19 August 2021 | US | 2020/0018872 | A1 | |
| | | | | paragraphs [0086]-[0089], [0095] | | | |
| | | | | JP | 2020-6651 | A | |
| | | | | DE | 102019004779 | A1 | |
| | | | | CN | 110712399 | A | |
| JP | 2021-513676 | A | 27 May 2021 | US | 2019/0235279 | A1 | |
| | | | | paragraphs [0163]-[0165] | | | |
| | | | | JP | 2023-178303 | A | |
| | | | | WO | 2019/152438 | A1 | |
| | | | | TW | 201938103 | A | |
| | | | | CN | 112384171 | A | |
| | | | | TW | 202116264 | A | |
| | | | | US | 2021/0165244 | A1 | |
| JP | 2002-131503 | A | 09 May 2002 | (Family: none) | | | |
| US | 2018/0169791 | A1 | 21 June 2018 | (Family: none) | | | |
| US | 4715702 | A | 29 December 1987 | (Family: none) | | | |
| JP | 2023-504906 | A | 07 February 2023 | US | 2021/0173228 | A1 | |
| | | | | fig. 3-5 | | | |
| | | | | US | 2023/0095536 | A1 | |
| | | | | WO | 2021/118926 | A1 | |
| | | | | KR | 10-2022-0110289 | A | |
| | | | | CN | 114930231 | A | |
| | | | | EP | 4070157 | A1 | |
| KR | 10-1927023 | B1 | 07 December 2018 | WO | 2019/177439 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019523447 A
- JP 2022007102 A
- WO 2020067407 A